# EUROPEAN PATENT SPECIFICATION

(11) **EP 2 870 821 B1**
(45) Date of publication and mention of the grant of the patent: **16.09.2020**
(21) Application number: 13870975.3
(22) Date of filing: 21.11.2013
(51) Int. Cl.: H04W 84/04, H04W 24/10

(54) **Mobile user equipment apparatus and method for operating a relay cell**
Mobiles Benutzerendgerät und Verfahren zum Betrieb einer Relaiszelle
Équipement d'utilisateur mobile et procédé de fonctionnement de cellule de relais

(30) Priority: 11.01.2013 GB 201300534
(43) Date of publication of application: 13.05.2015
(73) Proprietor: NEC Corporation, Tokyo 108-8001 (JP)
(72) Inventor: DELSOL, Thomas, Reading Berkshire RG2 0TD (GB); PANAITOPOL, Dorin, Reading Berkshire RG2 0TD (GB)
(74) Representative: MacDougall, Alan John Shaw
(86) International application number: PCT/JP2013/081985
(87) International publication number: WO 2014/109142

(56) References cited:
- WO-A1-2011/094644
- WO-A1-2011/094644
- WO-A1-2011/109027
- WO-A1-2012/158085
- WO-A1-2014/069064
- WO-A2-2007/119168
- US-A1- 2012 282 961
- ERICSSON: 'E-UTRA Intra-frequency Measurement Configuration and Control' R2-063228, 3GPP XP050132724
- INSTITUTE FOR INFORMATION INDUSTRY (III), NEW POSTCOM: 'Alt.2 with Relay GW and PGW collocated with initial DeNB solution for mobile relay scenario' R3-120810, 3GPP 30 March 2012, XP050669160
- HUAWEI: 'Detailed description of MRO problem cases' R3-091108, 3GPP 08 May 2009, XP050341481
- QUALCOMM EUROPE: 'Relay call flows' R3-091534, 3GPP 28 August 2009, XP050352954

## Description

### Technical Field

The present invention relates to a communication system and to components thereof for providing communication services to mobile or fixed communication devices. The invention has particular but not exclusive relevance to providing handover from/to user equipment operating as a relay in Long Term Evolution (LTE) communication systems currently being developed by the 3^{rd} Generation Partnership Project (3GPP).

### Background Art

In 3GPP LTE networks, a base station (i.e. evolved NodeB, eNB) of a Radio Access Network (RAN) transmits data and signaling between a core network (CN) and User Equipment (UEs) located within the base station's coverage area.

In addition to normal base stations, relay base stations (relay nodes) were introduced in Rel-10 of the 3GPP standards documentation to provide coverage extension within the cell(s) operated by base stations, as a tool to improve, for example, the coverage of high data rates for user equipment, temporary network deployment, cell edge throughput and/or to provide coverage in new cell areas. Relaying is realised by having a relay node wirelessly connected to a donor base station (DeNB). In addition to serving its own 'donor' cell, the DeNB serves the RN (and hence any user equipment connected to this relay node), via a modified version of the Evolved Universal Terrestrial Radio Access (E-UTRA) radio interface. The modified interface is referred to as the 'RN-Un' interface. The 3GPP standards documentation defines in Section 4.7 of TS 36.300 v11.3.0 the architecture of RNs and the way in which they establish connections with their donor base station. Mobile RNs (MRNs) are also included in Rel-11 as a study item and the deployment use case is mainly focused on high speed trains where the relay node in mounted on and moves with the train.

Each RN is provided with many aspects of a base station's functionality and is therefore capable of acting as a base station serving user equipment in its own 'relay' cell via a wireless
means for operating the relay cell;
means for establishing a connection with the further mobile communication device within said relay cell;
means for transmitting configuration data to the further mobile communication device, wherein said configuration data defines at least one trigger event for triggering measurement reporting for at least one cell of said plurality of cells;
means for receiving a measurement report, from the further mobile communication device, responsive to said trigger event occurring.
[Supplementary note 3]
   The mobile communication device according to Supplementary note 2, further comprising means for initiating handover of the further mobile communication device, based on the received measurement report.
[Supplementary note 4]
   The mobile communication device according to Supplementary note 2, further comprising means for transmitting said measurement report to a base station to which the relay mobile communication device is connected.
[Supplementary note 5]
   The mobile communication device according to Supplementary note 4, further comprising means for receiving, responsive to the measurement report, a message from the base station for initiating handover of the further mobile communication device, and means for transmitting, to the further mobile communication device, a message for initiating said handover of the further mobile communication device.
[Supplementary note 6]
   The mobile communication device according to any of Supplementary notes 2 to 5, operable to communicate with a base station and/or to communicate with the further mobile communication device via a respective non-LTE interface.
[Supplementary note 7]
   The mobile communication device according to any of Supplementary notes 2 to 5, operable to communicate with the further mobile communication device via a respective LTE interface, such as a 'UER-Uu' interface.
[Supplementary note 8]
   The mobile communication device according to any of Supplementary notes 36.331 v11.1.0 standard. In particular, the above standard defines measurement report triggering related to eight different event types (e.g. Events A1 to A6, B1, and B2) that the base station may configure for user equipment within its cell(s). In summary, each event relates to a scenario in which measured signal conditions meet predetermined criteria. When a particular event occurs (i.e. measured signal conditions meet the associated predetermined criteria) transmission of an event report describing the event type and associated parameters is triggered. For example, an event may occur if measured signal conditions in the mobile telephone's serving cell (and optionally also modified by a pre-defined offset value) become worse (or become better in a neighbouring cell) than a pre-defined threshold. 3GPP has not introduced any events related specifically to relay nodes because, from the network point of view, relay nodes are treated as base stations (and indeed relay node cells appear to be base station cells for the mobile telephones).

Further details of the overall mobility sequence are described in section 10.1.2 of the 3GPP TS 36.300 standard, which describes the configuration of measurements by the base station and the subsequent triggering of handover.

Recently, 3GPP introduced the possibility of direct, device-to-device (D2D) communications between mobile telephones that are in each other's proximity. In case of D2D communications, user data is exchanged between the two (or more) mobile telephones without routing it via the radio access network and the core network, whilst maintaining a control link between each involved mobile telephone and their respective base stations. In LTE networks, D2D communications are thus carried out under continuous network control and only whilst the involved mobile telephones are operating within the network's coverage. The D2D approach results in a more efficient usage of the valuable radio resources available to the base station(s). Example D2D communications have been presented in 3GPP document no. S1-113344 titled "Feasibility Study for Proximity Services".

Direct communication channels between mobile telephones may also be beneficially used to implement a UE-based relaying function when one mobile telephone relays data and signalling for another mobile telephone (i.e. to/from a serving base station). The relaying mobile telephone is called UE Relay (UE-R) throughout this document. Such a UE-based relaying function might beneficially further improve the cell coverage of a serving base station and/or load balancing of the LTE network.

WO 2014/069064, which was published after the filing date of the present application, discloses a system in which a communication device provides measurement reports to a communication network. The communication device connects to a cell of the network and receives configuration data for at least one relay specific trigger event for triggering measurement reporting for at least one relay cell operated by a relay device for the base station. The communication device performs measurements and sends a measurement report to the communication network when the trigger event has occurred.

WO 2011/094644 discloses that a decision whether to perform a handover between a relay and a base station may depend, at least in part, on a backhaul link between the relay and the donor base station serving the relay. That is, the relay may provide information relating to a characteristic of the backhaul link to the user equipment, and the user equipment may utilize this information to bias its measurements of signals transmitted from the relay and the base station in accordance with the characteristic of the backhaul link. In this way, if the backhaul link suffers such that it becomes a bottleneck, the handover decision between the relay and the base station is better informed than a decision based solely on the transmissions from the relay and from the base station.

US 2012/282961 discloses a mobile radio communication device which includes a first communication interface configured to communicate with another mobile radio communication device, a second communication interface configured to communicate with a mobile radio base station, and a relay quality determiner configured to determine a quality of relaying data between the other mobile radio communication device and the mobile radio base station via the first communication interface and the second communication interface.

### Citation List

### Non Patent Literature

NPL 1: 3GPP TS 36.300 vll.3.0
NPL 2: 3GPP TS 36.331 vl 1.1.0
NPL 3: 3GPP document no. S 1-113344 titled "Feasibility Study for Proximity Services"

### Summary of Invention

### Technical Problem

However, the current standards do not address such UE-based relaying and it is also not possible to handover mobile telephones from/to cells operated by UE Relays. Even ifUE Relay were treated as normal relay nodes, existing handover techniques are not applicable, because existing relay nodes (including Mobile Relay Nodes or MRNs) are deployed by the network operators and thus form an integral part of the network infrastructure whereas UE-based relaying is provided in a more or less ad-hoc manner.

The present invention provides an improved communication system and improved components of the communication system which overcome or at least alleviate one or more of the above issues, as set out in the appended independent claims.

### Solution to Problem

Disclosed is a mobile communication device for providing measurement reports to a communication network comprising a plurality of cells, the communication device comprising: means for connecting, within a relay cell of said plurality of cells, to a relay mobile communication device, wherein said relay cell is operated by a relay mobile communication device; means for receiving configuration data from said relay mobile communication device, said configuration data for configuring measurements in at least one of said plurality of cells wherein said configuration data defines at least one trigger event for triggering measurement reporting for at least one cell of said plurality of cells; means for performing measurements, based on said received configuration data, in said at least one cell; means for determining whether or not said trigger event has occurred based on results of said measurements; and means for sending a measurement report to said relay mobile communication device, when said trigger event has been determined to have occurred.

In another aspect, the invention provides a relay mobile communication device for operating a relay cell in a communication network comprising a plurality of cells and for obtaining measurement reports from a further mobile communication device; said relay mobile communication device comprising: means for operating the relay cell; means for establishing a connection with the further mobile communication device within said relay cell; means for transmitting configuration data to the further mobile communication device, wherein said configuration data defines at least one trigger event for triggering measurement reporting for at least one cell of said plurality of cells; means for receiving a measurement report, from the further mobile communication device, responsive to said trigger event occurring.

The relay mobile communication device may further comprise means for initiating handover of the further mobile communication device, based on the received measurement report.

The relay mobile communication device may further comprise means for transmitting said measurement report to a base station to which the relay mobile communication device is connected.

The relay mobile communication device may further comprise means for receiving, responsive to the measurement report, a message from the base station for initiating handover of the further mobile communication device, and means for transmitting, to the further mobile communication device, a message for initiating said handover of the further mobile communication device.

The relay mobile communication device may be operable to communicate with a base station and/or to communicate with the further mobile communication device via a respective non-LTE interface.

The relay mobile communication device may be operable to communicate with the further mobile communication device via a respective LTE interface, such as a 'UER-Uu' interface.

The relay mobile communication may be operable to communicate with a base station and/or to communicate with the further mobile communication device via a respective non-LTE The mobile communication device according to any of Supplementary notes 1 to 26 wherein said results of said measurements comprise a measure of at least one of: a reference signal receive power 'RSRP'; a reference signal receive quality 'RSRQ'; a received signal strength indicator 'RSSI'; and a received signal code power 'RSCP'.
[Supplementary note 28]
   The mobile communication device according to any of Supplementary notes 1 to 27 wherein said configuration data defines a periodic trigger event.
[Supplementary note 29]
   The mobile communication device according to any of Supplementary notes 1 to 28 wherein said configuration data comprises a hysteresis value to define different conditions for entering and leaving said at least one cell.
[Supplementary note 30]
   The mobile communication device according to Supplementary note 29 wherein said configuration data comprises a timer value and defines a trigger event which occurs when: (a) said entering condition is met at the start of said timer; and (b) said leaving condition is not met whilst said timer is running.
[Supplementary note 31]
   The mobile communication device according to any of Supplementary notes 1 to 30 wherein said measurement report comprises an identification of said trigger event and an identification of said cell.
[Supplementary note 32]
   The mobile communication device according to any of Supplementary notes 1 to 31 wherein said measurement report comprises information on a received power level in said cell.
[Supplementary note 33]
   The mobile communication device according to any of Supplementary notes 1 to 32 further comprising means for receiving additional configuration data for configuring measurements in at least one further cell wherein said additional configuration data comprises at least one trigger event specific to base station cells.
[Supplementary note 34]
   The mobile communication device according to any of Supplementary notes 1 to 33 wherein said communication device is operable to receive said configuration data and/or send said measurement report using Radio Resource Control 'RRC' signalling.
[Supplementary note 35]
   The mobile communication device according to any of Supplementary notes 1 to 33 wherein said communication device is operable to receive said configuration data and/or send said measurement report using a non- Radio Resource Control 'RRC' signalling protocol.
[Supplementary note 36]
   The mobile communication device according to Supplementary note 35 wherein said communication device is operable to encapsulate said configuration data and/or send said measurement report in a message sent using said non- Radio Resource Control 'RRC' signalling protocol.
[Supplementary note 37]
   The mobile communication device according to any of Supplementary notes 1 to 36 comprising at least one of a mobile telephone, a personal digital assistant, a laptop computer, a web browser, and an e-book reader.
[Supplementary note 38]
   A base station for a communication network comprising a plurality of cells, the base station comprising:
   means for establishing a connection with a relay mobile communication device, wherein said relay mobile communication device operates a relay cell of said plurality of cells;
   means for transmitting, to the relay communication device, a message for initiating configuration of measurements, by a further mobile communication device, in said at least one cell of said plurality of cells wherein said configuration is based on configuration data defining at least one trigger event for triggering measurement reporting for at least one cell of said plurality of cells.
[Supplementary note 39]
   The base station according to Supplementary note 38, further comprising means for receiving a measurement report, from the relay mobile communication device, the measurement report relating to the further mobile communication device.
[Supplementary note 40]
   The base station according to Supplementary note 39, further comprising means for initiating handover of the further mobile communication device, based on the received measurement report.
[Supplementary note 41]
   The base station according to Supplementary note 40 further comprising means for selecting a handover target cell for said communication device based on said received measurement report.
[Supplementary note 42]
   The base station according to any of Supplementary notes 38 to 41 comprising an E-UTRAN base station.
[Supplementary note 43]
   The base station according to any of Supplementary notes 38 to 41 further comprising means for providing a 'UER-Un' interface between said base station and a communication device configured to operate as a relay device.
[Supplementary note 44]
   The base station according to any of Supplementary notes 38 to 43, further comprising means for generating said configuration data, wherein said message for initiating comprises said configuration data.
[Supplementary note 45]
   The base station according to any of Supplementary notes 38 to 43, wherein said message for initiating is arranged to initiate generation of said configuration data in said relay mobile communication device.
[Supplementary note 46]
   A system comprising at least one mobile communication device according to any of Supplementary notes 1 to 37, and the base station according any of Supplementary notes 38 to 45.
[Supplementary note 47]
   A method, performed by a mobile communication device, of providing measurement reports to a communication network comprising a plurality of cells, the method comprising:
   connecting, within a relay cell of said plurality of cells, to a relay mobile communication device, wherein said relay cell is operated by a relay mobile communication device;
   receiving configuration data from said relay mobile communication device, said configuration data for configuring measurements in at least one of said 'RRC' signalling protocol.

The mobile communication device may comprise at least one of a mobile telephone, a personal digital assistant, a laptop computer, a web browser, and an e-book reader.

Also disclosed is a base station for a communication network comprising a plurality of cells, the base station comprising: means for establishing a connection with a relay mobile communication device, wherein said relay mobile communication device operates a relay cell of said plurality of cells; means for transmitting, to the relay communication device, a message for initiating configuration of measurements, by a further mobile communication device, in said at least one cell of said plurality of cells wherein said configuration is based on configuration data defining at least one trigger event for triggering measurement reporting for at least one cell of said plurality of cells.

The base station may further comprise means for receiving a measurement report, from the relay mobile communication device, the measurement report relating to the further mobile communication device.

The base station may further comprise means for initiating handover of the further mobile communication device, based on the received measurement report.

The base station may further comprise means for selecting a handover target cell for said communication device based on said received measurement report.

The base station may comprise an E-UTRAN base station.

The base station may further comprise means for providing a 'UER-Un' interface between said base station and a communication device configured to operate as a relay device.

The base station may further comprise means for generating said configuration data, wherein said message for initiating comprises said configuration data.

The message for initiating may be arranged to initiate generation of said configuration data in said relay mobile communication device.

Also disclosed is a system comprising at least one mobile communication device according to one of the above aspects, and a base station according to one of the above aspects.

In another aspect, the invention provides a method, performed by a mobile communication device, of providing measurement reports to a communication network comprising a plurality of cells, the method comprising: connecting, within a relay cell of said plurality of cells, to a relay mobile communication device, wherein said relay cell is operated by a relay mobile communication device; receiving configuration data from said relay mobile communication device, said configuration data for configuring measurements in at least one of said plurality of cells wherein said configuration data defines at least one trigger event for triggering measurement reporting for at least one cell of said plurality of cells; performing measurements, based on said received configuration data, in said at least one cell; determining whether or not said trigger event has occurred based on results of said measurements; and sending a measurement report to said relay mobile communication device, when said trigger event has been determined to have occurred.

In another aspect, the invention provides a method, performed by a relay mobile communication device, of operating a relay cell in a communication network comprising a plurality of cells and for obtaining measurement reports from a further mobile communication device; said method comprising: establishing a connection with the further mobile communication device within said relay cell; transmitting configuration data to the further mobile communication device, wherein said configuration data defines at least one trigger event for triggering measurement reporting for at least one cell of said plurality of cells; receiving a measurement report, from the further mobile communication device, responsive to said trigger event occurring.

Also disclosed is a method, performed by a base station for a communication network comprising a plurality of cells, the method comprising: establishing a connection with a relay mobile communication device, wherein said relay mobile communication device operates a relay cell of said plurality of cells; transmitting, to the relay communication device, a message for initiating configuration of measurements, by a further mobile communication device, in said at least one cell of said plurality of cells wherein said
configuration is based on configuration data defining at least one trigger event for triggering measurement reporting for at least one cell of said plurality of cells.

Also disclosed is a computer program product comprising computer implementable instructions for causing a programmable computer device to become configured as a communication device as described above or as a base station as described above.

The invention also provides a corresponding system, methods and computer software products that may be provided on a carrier signal or on a recording medium, such as a CD, DVD or the like.

### Advantageous Effects of Invention

According to the present invention, it is possible to provide improved techniques for overcoming or at least alleviating an issue that the current standards do not address such UE-based relaying and it is also not possible to handover mobile telephones from/to cells operated by UE Relays.

### Brief Description of Drawings

Embodiments of the invention will now be described, by way of example only, with reference to the attached figures in which:
[Fig. 1]

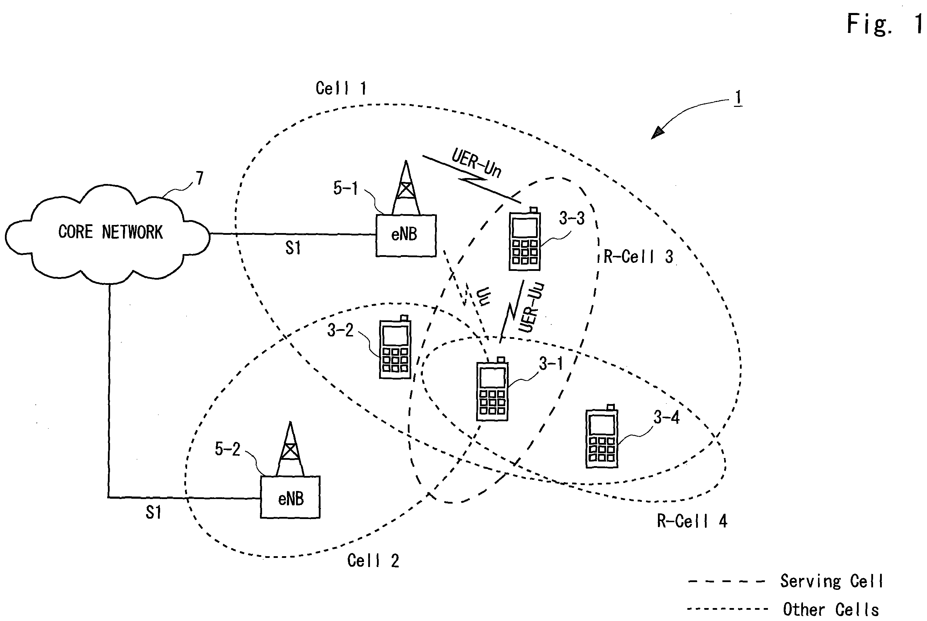

   Fig. 1 schematically illustrates a mobile telecommunication system scenario in which a cell currently serving a mobile telephone is operated by a mobile telephone configured to work as a UE relay;
[Fig. 2A]

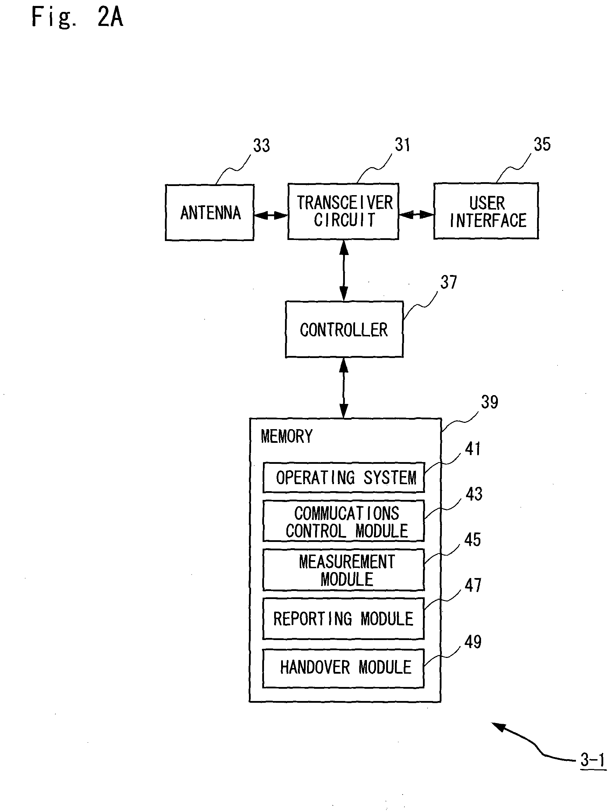

   Fig. 2A is a block diagram illustrating the main components of a mobile telephone forming part of the system shown in Fig. 1;
[Fig. 2B]

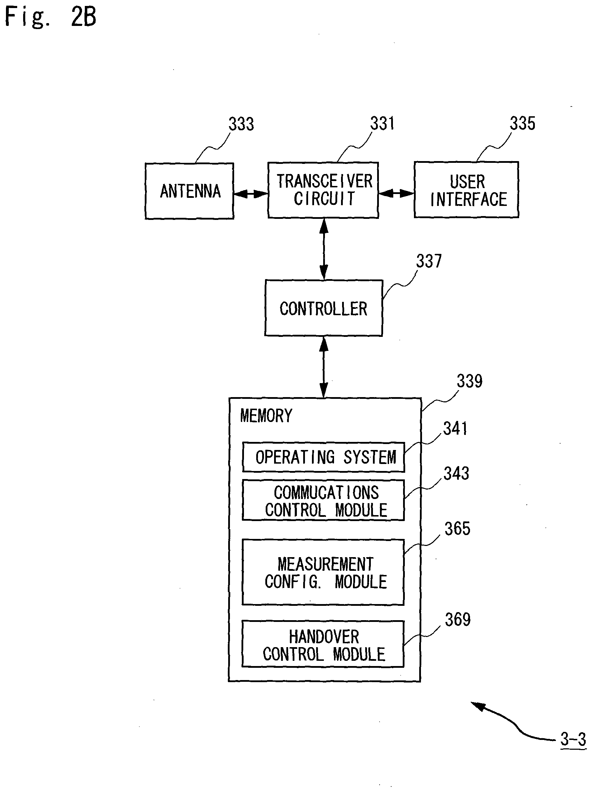

   Fig. 2B is a block diagram illustrating the main components of a relaying mobile telephone forming part of the system shown in Fig. 1;
[Fig. 3]

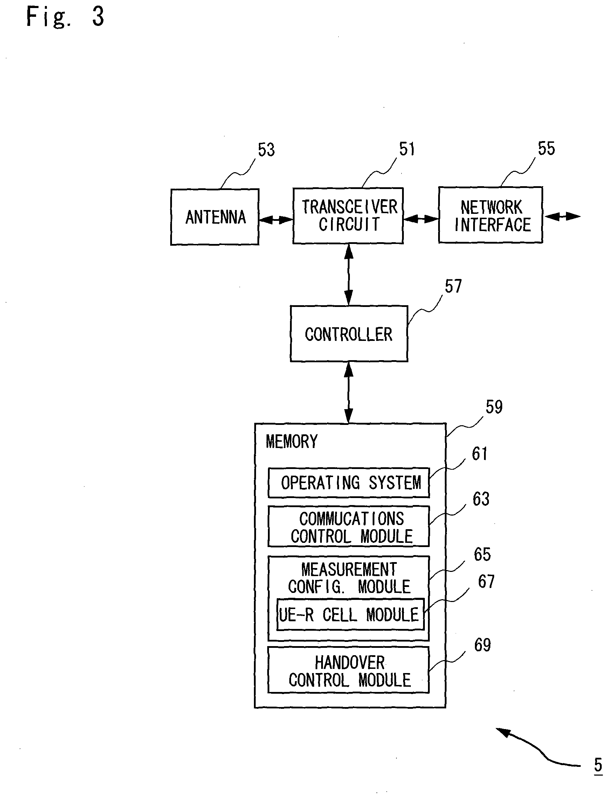

   Fig. 3 is a block diagram illustrating the main components of the base station forming part of the system shown in Fig. 1;
[Fig. 4A]

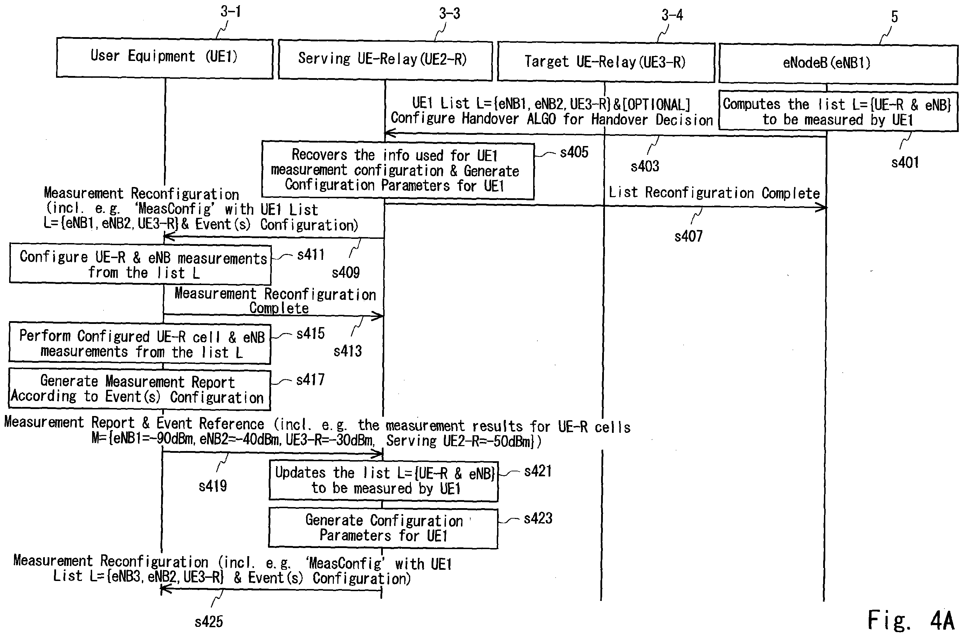

   Fig. 4A illustrates a first timing diagram showing signalling messages exchanged between the mobile telephone, relaying mobile telephone and the base station shown in Fig. 1;
[Fig. 4B]

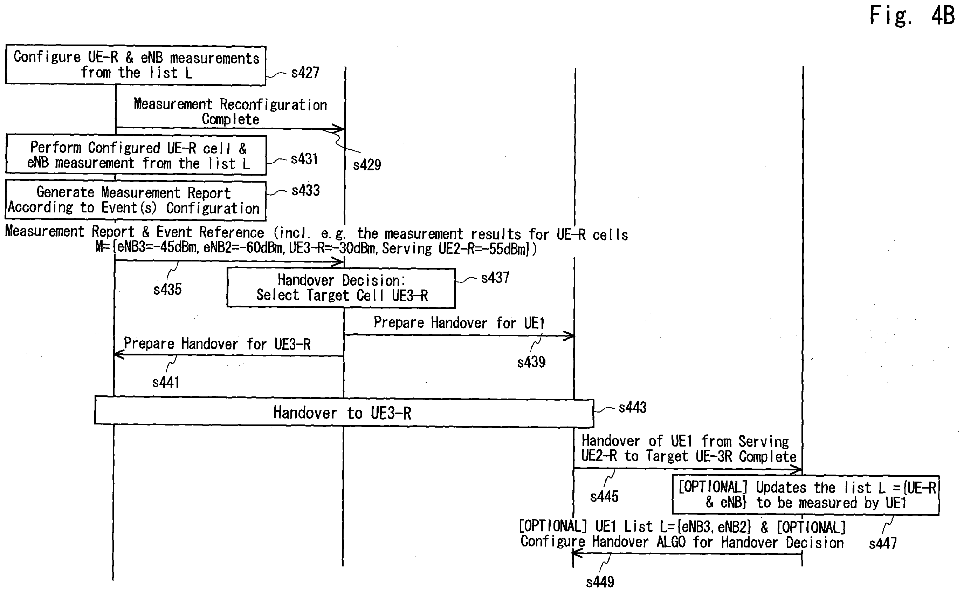

   Fig. 4B illustrates a first timing diagram showing signalling messages exchanged between the mobile telephone, relaying mobile telephone and the base station shown in Fig. 1;
[Fig. 5A]

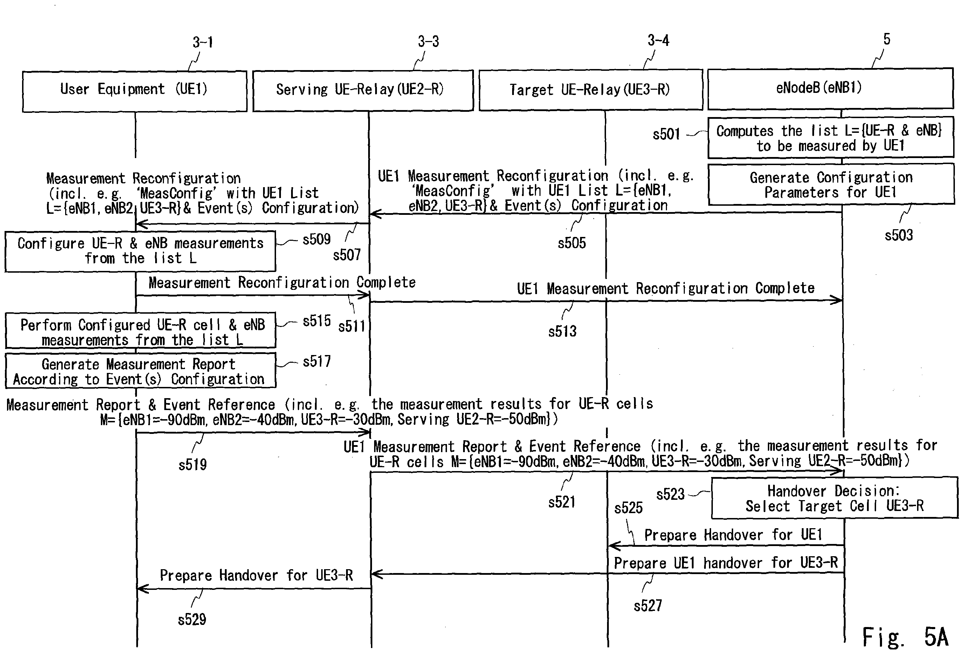

   Fig. 5A illustrates a second timing diagram showing signalling messages exchanged between the mobile telephone, relaying mobile telephone and the base station shown in Fig. 1;
[Fig. 5B]

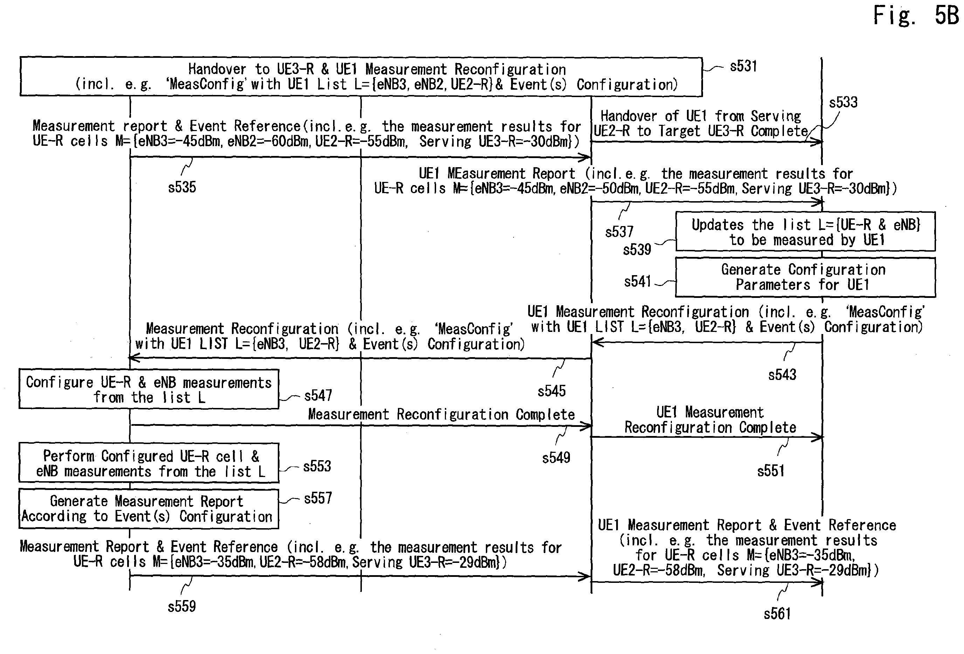

   Fig. 5B illustrates a second timing diagram showing signalling messages exchanged between the mobile telephone, relaying mobile telephone and the base station shown in Fig. 1;
[Fig. 6]

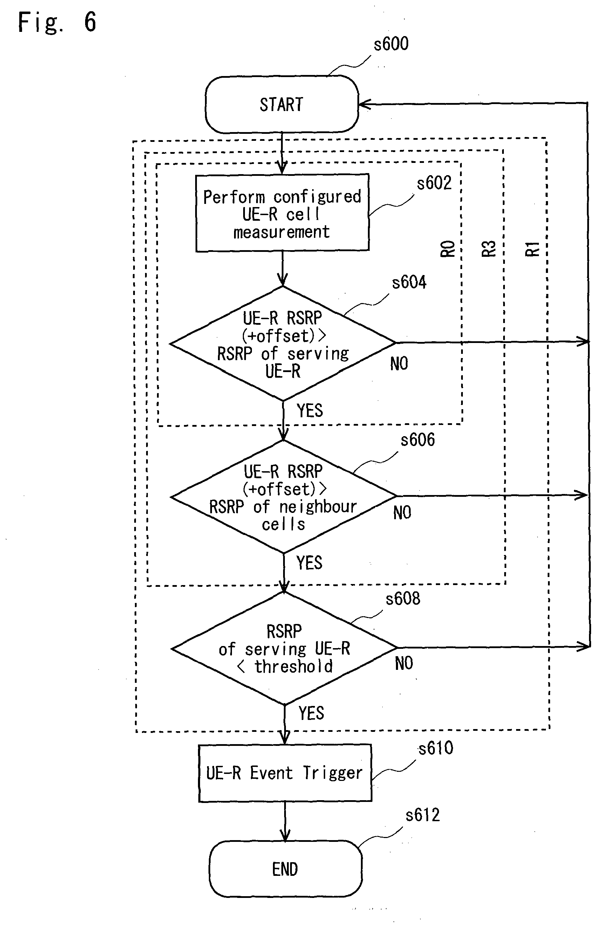

   Fig. 6 is a flowchart illustrating a process performed by a mobile telephone when performing cell signal measurements and reporting with respect to a cell operated by another mobile telephone configured to work as a relay device;
[Fig. 7]

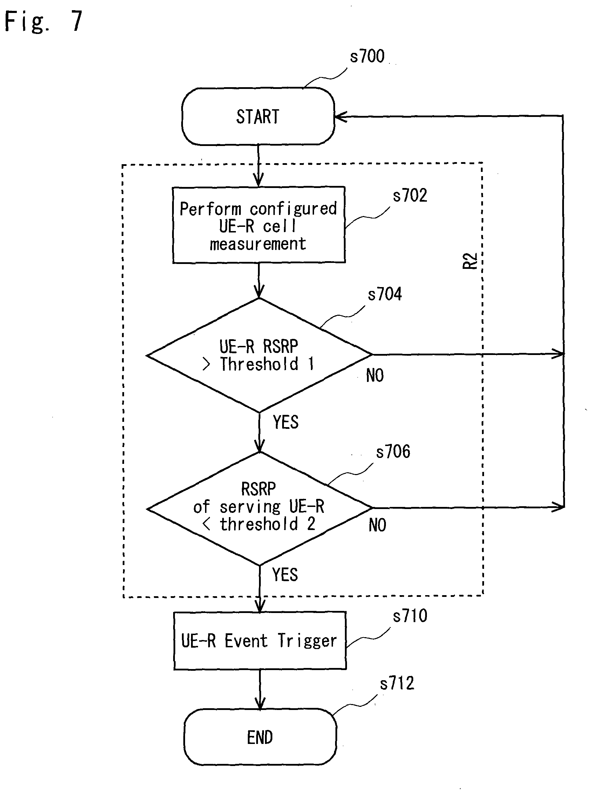

   Fig. 7 is a flowchart illustrating another process performed by a mobile telephone when performing cell signal measurements and reporting with respect to a cell operated by another mobile telephone configured to work as a UE relay;
[Fig. 8]

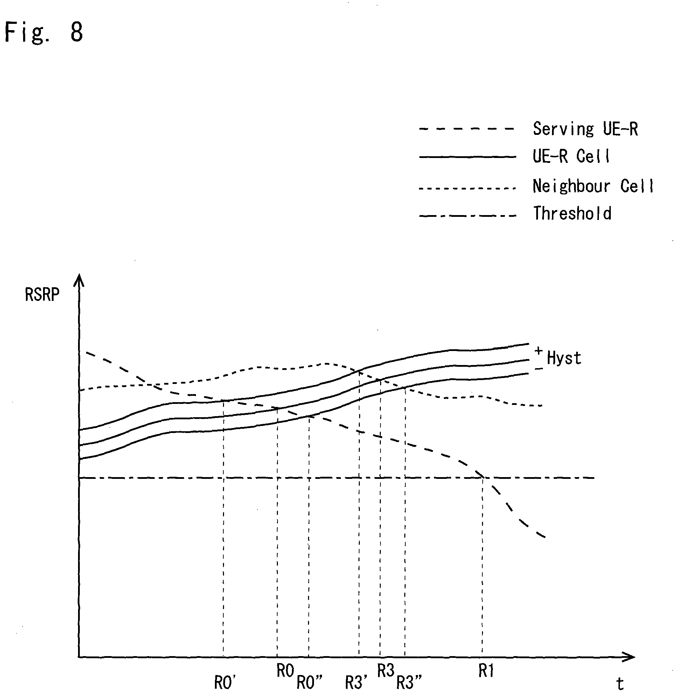

   Fig. 8 is a graph illustrating the changes in signal strengths over time as measured by the mobile telephone shown in Fig. 1;
[Fig. 9]

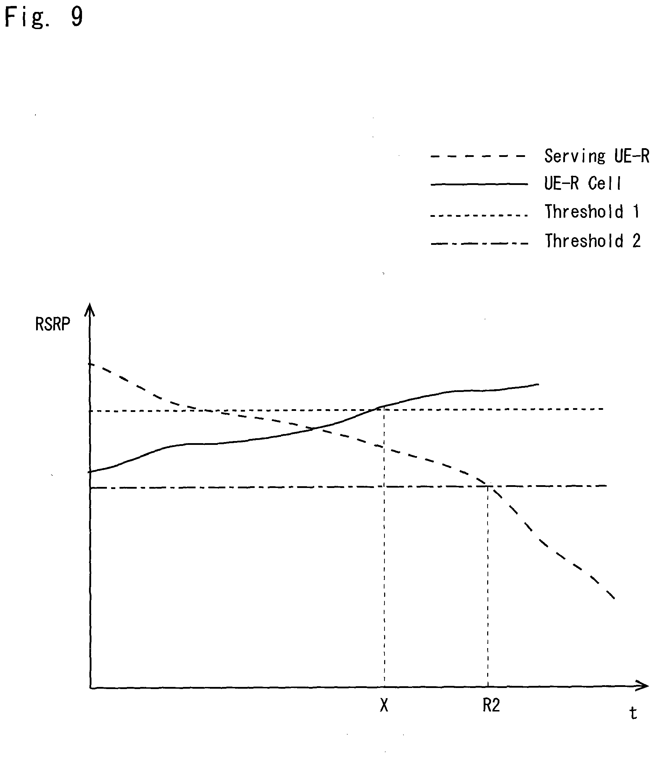

   Fig. 9 is another graph illustrating the changes in signal strengths of a serving UE-Relay and another UE-Relay cell over time as measured by the mobile telephone shown in Fig. 1; and
[Fig. 10]

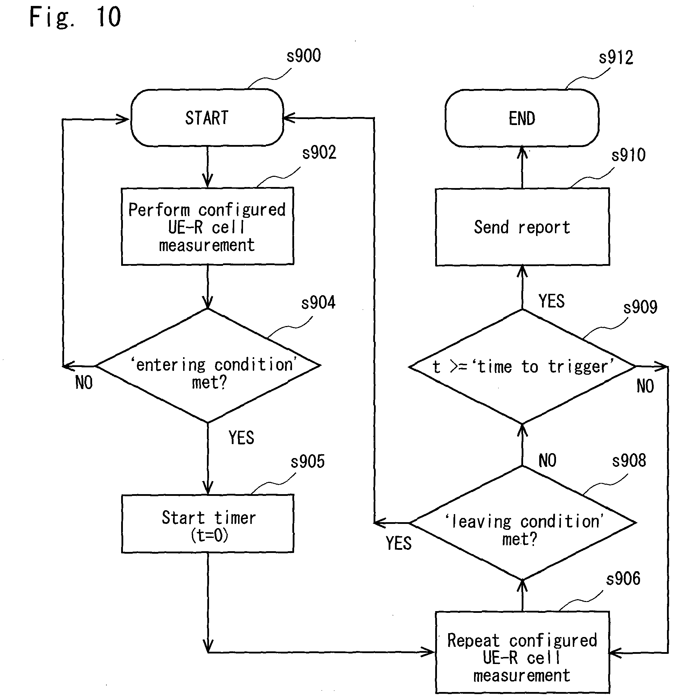

   Fig. 10 illustrates a mechanism taking into account different entering and leaving conditions that result from application of hysteresis.

### Description of Embodiments

### (Overview)

Fig. 1 schematically illustrates a mobile (cellular) telecommunication system 1 including user equipment 3 (comprising a plurality of mobile telephones 3-1 to 3-4) and base stations 5 (comprising a plurality of base stations 5-1 to 5-2). Each base station 5 is coupled to a core network 7 via an 'S1' interface and the core network 7 is also coupled to other networks (e.g. the Internet) via one or more gateways (not shown). The core network 7 includes, amongst other things, a mobility management entity (MME), a home subscriber server (HSS), a serving gateway (SGW) and a Packet Data Network (PDN) Gateway (PGW), which have also been omitted for sake of simplicity. The 'S1' interface between the base stations 5 and the core network 7 might utilise, for example, a high speed, high bandwidth communication link, such as an optical fiber link and the like. An 'X2' interface (not shown) is also provided between neighbouring base stations 5 to facilitate data exchange between them and to compute eNB neighbour list. As those skilled in the art will appreciate, whilst four mobile telephones 3 and two base stations 5 are shown in Fig. 1 for illustration purposes, additional user equipment and base stations may be present in a deployed system.

In this example, some or all of the mobile telephones 3 support relaying by operating their own relay cells, such as 'R-Cell 3' and 'R-Cell 4' of the third and fourth mobile telephones 3-3 and 3-4, respectively. The communication network 1 keeps track of which mobile telephones 3 are (or can be) used as relays, and will also receive information from the mobile telephones 3 to be relayed in order to determine the best cell to be used as a target cell when performing handover. Determination of the best cell to be used as a target cell can be done by a serving relaying mobile telephone or by a base station in communication with the serving relaying mobile telephone. The information received by the network could be any information measured or information deduced from the measurements performed by the mobile telephones 3. For example, the mobile telephones 3 might classify their neighbour cells in order of received power. However, since the cells are only reported if their signal conditions meet some predefined criteria (set by the network), detailed measurements might not need to be provided by the mobile telephones 3. Identifying the target cell(s) might be sufficient.

As illustrated in Fig. 1, the first mobile telephone 3-1 is initially served by mobile telephone 3-3 providing UE-based relaying functionality within its relay cell 'R-Cell 3'. A 'UER-Un' interface is provided between the base station 5-1 and the serving relaying mobile telephone 3-3, and a 'UER-Uu' interface is provided between the serving relaying mobile telephone 3-3 and the served mobile telephone 3-1. However, the 'S1' interface between the serving base station 5-1 and the core network 7 remains unchanged even after handover to 'R-Cell 3'. Therefore, any user data between the mobile telephone 3-1 and its peer entity (e.g. another mobile telephone 3 or a remote server) is transmitted via the serving relaying mobile telephone 3-3 using the 'UER-Uu' interface, and via base station 5-1 using the 'UER-Un' interface, and via the core network 7 using the 'S1' interface. However, when the mobile telephone 3-1 approaches the edge of 'R-Cell 3' or when the signal conditions within this cell begin to deteriorate the mobile telephone 3-1 needs to handover to another cell, such as 'Cell 2' operated by base station 5-2, 'R-Cell 4' operated by mobile telephone 3-4, or any other suitable cell. Therefore, the mobile telephone 3-1 is configured (by or via relaying mobile telephone 3-3) to perform signal measurements with respect to neighbouring cells and to report the results based on these measurements in case certain predetermined signal conditions are met. Information defining the predetermined signal conditions are provided by the relaying mobile telephone 3-3 currently serving the mobile telephone 3-1. The above measurement and reporting process serves to assist the serving relaying mobile telephone 3-3, and/or the base station 5 serving the relaying mobile telephone 3-3, to identify when handover may be necessary and/or to select a suitable target cell when a handover becomes necessary for the mobile telephone 3-1. Therefore, the process allows mobility of UE from serving relaying mobile telephone to a neighbour relaying mobile telephone or from a serving relaying mobile telephone to a neighbour base station (or from a serving relaying mobile telephone to another entity, such as a relay node).

As described below, the relaying mobile telephone 3-3 configures signal measurements for the mobile telephone 3-1 and receives the results of any measurement (i.e. an indication that a configured event has occurred) using RRC signalling or the like. When the mobile telephone 3-1 indicates that a predetermined handover condition is met the relaying mobile telephone 3-3 proceeds to select a new serving cell that provides more favourable signal conditions to the mobile telephone 3-1. The generation of the configuration parameters for configuring the signal measurements may take place in the relaying mobile telephone 3-3 (e.g. based on information received from the base station 5-1 which serves the relaying mobile telephone 3-3). The generation of the configuration parameters for configuring the signal measurements may take place in the base station 5-1 which serves the relaying mobile telephone 3-3, and be forwarded to the relaying mobile telephone 3-3 which in turn forwards the configuration parameters to the mobile telephone 3-1 being configured.

In this example, the serving relaying mobile telephone 3-3 is, therefore, advantageously able to configure the mobile telephone 3-1 to measure the quality of signals transmitted both by mobile telephones that are in the vicinity, having UE-based relaying functionality (e.g. mobile telephone 3-4 providing UE-based relaying functionality within its relay cell denoted 'R-Cell 4') and by conventional base stations 5. The serving relaying mobile telephone 3-3 configures a number of specific events (e.g. Events R0 to R6 that will be described in detail below) based on signal measurements. In this way, the serving relaying mobile telephone 3-3 is advantageously able to set event configuration for mobile telephones 3 to allow them to handover to UE-based relay cells or to 'normal' cells (e.g. cells operated by an RN or eNB, NB, etc.). The serving relaying mobile telephone 3-3 may also configure the mobile telephone 3-1 to perform measurements in accordance with other events (e.g. one of the abovementioned Events A1 to B2 set out in section 5.5.4 of the 3GPP TS 36.331 standard).

In order to facilitate the use of the specific events, the base stations 5 are beneficially able to keep track of mobile telephones 3 that are operating relay cells (i.e. UE Relays) and that are registered in a cell operated by them (e.g. based on information provided to the network by the mobile telephones 3 operating these cells or by other means such as subscription information obtained from the HSS). Hence, the base stations 5 can beneficially determine which of the measured cells are UE Relay cells.

The mobile telephone 3-1 performs measurements with respect to signals transmitted by other mobile telephones 3 that are operating as UE Relays in its vicinity (such as mobile telephone 3-3) and sends measurement reports, when triggered by an associated event configured by the base station, in order to cause the base station to initiate a handover procedure if appropriate. Optionally, the mobile telephone 3-1 also performs all the normal measurements with respect to the serving cell (i.e. Cell 1) and/or the neighbouring base station cells (e.g. Cell 2). Therefore, when a handover from the current serving cell ('Cell 1') becomes necessary, the mobile telephone 3-1 can be handed over to whichever cell offers the most satisfactory conditions for this mobile telephone 3-1 to continue its communication. For example, the mobile telephone 3-1 can be handed over to a relay cell ('R-Cell 3') operated by another mobile telephone 3-3, if the signal conditions in that cell are satisfactory.

In this example, the relaying mobile telephone 3-3 is shown as being connected to the same serving base station 5-1 as the mobile telephone 3-1 sending the measurement report although it will be appreciated that the relaying mobile telephones 3-3 and the measuring mobile telephone 3-1 may be served by different base stations.

In summary, therefore, the system beneficially takes into account that some of the cells are operated by a mobile telephone 3 (e.g. as opposed to relay cells operated by a conventional relay node) and is able to set different handover conditions with respect to conventional/relay cells operated by a base station/conventional relay node and relay cells operated by mobile telephones. A UE Relay is beneficially able to configure signal measurements for mobile telephones that it serves and when a serving UE Relay configures the signal measurements for a mobile telephone, it is able to configure different events for the relay cells operated by the mobile telephones than for any cells operated by base stations or by conventional relay nodes. Thus, the system can ensure that handover from a serving UE Relay to another UE Relay only takes place when absolutely necessary, for example when base station cells or conventional relay node cells (that have been deployed by the network operator) are not available or when such cells do not offer a minimum required signal quality for the particular service used by a mobile telephone.

### (Mobile telephone)

Fig. 2A is a block diagram illustrating the main components of the mobile telephone 3-1 shown in Fig. 1. As shown, the mobile telephone 3-1 includes transceiver circuitry 31 which is operable to transmit signals to, and to receive signals from, the base station 5 and/or other mobile telephones via at least one antenna 33. The mobile telephone 3-1 may of course have all the usual functionality of a conventional mobile telephone (such as a user interface 35) and this may be provided by any combination of hardware, software and firmware, as appropriate. The operation of the transceiver circuit 31 is controlled by a controller 37 in accordance with software stored in memory 39. The software includes, among other things, an operating system 41, a communications control module 43, a measurement module 45, a reporting module 47, and a handover module 49.

The communications control module 43 is operable to handle (e.g. generate, send and receive) control signals for controlling the connections between the mobile telephone 3-1 and other user equipment or various network nodes, such as the base station 5 and serving mobile telephone 3-3.

The measurement module 45 is operable to perform desired signal measurements (e.g. CRS or CSI-RS measurements), to determine associated signal quality values (e.g. RSRP and RSRQ) and to determine when particular configured event conditions (e.g. A1 to B2 or R0 to R6) have been met. When event conditions are determined to have been met, the measurement module 45 identifies, and indicates to the reporting module 47, each neighbouring/relay cell to which the event relates.

The reporting module 47 is operable to generate and send information (e.g. by triggering a measurement report) to the serving relaying mobile telephone 3-3 or base station 5, when one of the configured events has occurred (e.g. based on the results of signal measurements performed by the measurement module 45). The information sent includes an indication of each neighbouring/relay cell to which the event relates and/or any further information that may assist the serving base station in making a handover decision.

The handover module 49 is operable to perform handover of the mobile telephone 3-1 from a current serving relaying mobile telephone 3-3 (or base station 5) to another cell, based on instructions received from the relaying mobile telephone 3-3 (or base station 5).

### (Relaying Mobile telephone)

Fig. 2B is a block diagram illustrating the main components of one of the mobile telephone 3-3 shown in Fig. 1, which in this example is a relaying mobile telephone. As shown, the mobile telephone 3-3 includes transceiver circuitry 331 which is operable to transmit signals to, and to receive signals from, the base station 5 and/or other mobile telephones via at least one antenna 333. The mobile telephone 3-3 may of course have all the usual functionality of the mobile telephone 3-1 (such as a user interface 335). The operation of the transceiver circuit 331 is controlled by a controller 337 in accordance with software stored in memory 339. The software includes, among other things, an operating system 341, a communications control module 343, a measurement configuration module 365, and a handover control module 369.

The communications control module 343 is operable to handle (e.g. generate, send and receive) control signals for controlling the connection between the relaying mobile telephone 3-3 and the mobile telephone 3-1, along with the connections between the relaying mobile telephone 3-3 and other user equipment or various network nodes, such as the base station 5.

The measurement configuration module 365 is operable to control the mobile telephone 3-1 to cause it to perform desired signal measurements (for example CRS or CSI-RS measurements) for UE-R and/or base station cells, and to cause the mobile telephone 3-1 to send associated information (e.g. in a measurement report) to the relaying mobile telephone 3-3 when a configured event has occurred. The measurement configuration module is configured to receive such associated information (e.g. in a measurement report) from the mobile telephone 3-1. The measurement configuration module 365 is also operable to pass the relevant information from the measurement report to the handover control module 369 for the purposes of identifying e.g. when handover should occur and/or to what cell. Alternatively or additionally to the measurement configuration module 365 and handover control module 369, a reporting module (not shown) may be provided which is configured to send the associated information (e.g. in a measurement report, or derived from a measurement report) to another entity, such as base station (which may pass the information to the network) or another relaying mobile telephone (e.g. for the purposes of another entity making configuration and/or handover decisions).

The handover control module 369 is operable to control handover of the mobile telephones (e.g. mobile telephone 3-1) currently served by the relaying mobile telephone 3-3 to other cells operated by either one of the base stations (such as 'Cell 1' or 'Cell 2') or by the mobile telephones having relaying function (such as 'R-Cell 4').

### (Base station)

Fig. 3 is a block diagram illustrating the main components of one of the base stations 5 shown in Fig. 1. As shown, the base station 5 includes transceiver circuitry 51 which is operable to transmit signals to, and to receive signals from, the mobile telephones 3 via at least one antenna 53. The base station 5 is also operable to transmit signals to and to receive signals from nodes in the core network 7 (such as the MME or the SGW) and other base stations, via a network interface 55. The operation of the transceiver circuit 51 is controlled by a controller 57 in accordance with software stored in memory 59. The software includes, among other things, an operating system 61, a communications control module 63, a measurement configuration module 65 (which also includes an UE-R cell module 67), and a handover control module 69.

The communications control module 63 is operable to control communications between the base station 5 and the mobile telephones 3, and the network devices such as the MME, the HSS, the SGW, the PGW, and neighbour base stations. The communications control module 63 is also operable to send relaying-capable mobile telephones (e.g. relaying mobile telephone 3-3) configuration data that controls the relaying-capable mobile telephone to operate either in a conventional transmission mode (in which the relaying-capable mobile telephone does not provide any relaying for other user equipment) or in a relaying transmission mode (in which the relaying-capable mobile telephone sends and receives data to be relayed to or from other user equipment).

The measurement configuration module 65 is operable to control the mobile telephones 3, either directly or via a relaying mobile telephone (e.g. mobile telephone 3-3), to cause them to perform desired signal measurements (for example CRS or CSI-RS measurements) and to send associated information (e.g. in a measurement report) when a configured event has occurred. The measurement configuration module 65 is also operable to pass the relevant information from the measurement report to the handover control module 69 for the purposes of identifying e.g. when handover should occur and/or to what cell.

The UE-R cell module 67 is operable to keep track of active UE-R cells and to control the mobile telephones 3, either directly or via a relaying mobile telephone (e.g. mobile telephone 3-3), to cause them to perform desired signal measurements (for example CRS or CSI-RS measurements) with respect to UE Relay cells (such as 'R-Cell 3' and 'R-Cell 4') and to send associated information (e.g. in a measurement report) when a configured relay event has occurred. The UE-R cell module 67 passes the relevant information from the measurement report to the handover control module 69 for the purposes of identifying when handover should occur to a UE-R cell and the destination of the handover.

The handover control module 69 is operable to control handover of the mobile telephones 3 currently served by a relaying mobile telephone 3-3 it serves, or served by the base station 5, to other cells operated by either one of the base stations (such as 'Cell 1' or 'Cell 2') or by the mobile telephones having relaying function (such as 'R-Cell 4').

In the above description, the mobile telephones 3-1, 3-3 and the base station 5 are described for ease of understanding as having a number of discrete modules (such as the communications control modules, the reporting module, and the handover control module). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

### (UE-R events)

The following includes a description of some of the events that might be used for mobility management (i.e. handover) of mobile telephones 3 from the serving UE-Relay to a neighbour UE-Relay or from the serving UE-Relay to a neighbour base station.

The events in this example comprise a hysteresis value to define different entering and leaving conditions for effectively initiating the triggering of an event and suppressing repeated triggering of the same event respectively.

The UE-R events for triggering entry to a relay cell that can be configured by the base station, and/or the serving UE-Relay, include, for example:
(Event R0)
   Entering condition:
      (UE-R RSRP + an offset value - Hyst) > RSRP of serving UE-R
   Leaving condition:
      (UE-R RSRP + an offset value + Hyst) < RSRP of serving UE-R
(Event R1)
   Entering condition:
      ((UE-R RSRP + an offset value - Hyst) > RSRP of serving UE-R) and ((UE-R RSRP + an offset value - Hyst) > RSRP of neighbour cell(s)) and (RSRP of serving UE-R + Hyst < a threshold)
   Leaving condition:
      ((UE-R RSRP + an offset value + Hyst) < RSRP of serving UE-R) and ((UE-R RSRP + an offset value + Hyst) < RSRP of neighbour cell(s)) and (RSRP of serving UE-R - Hyst > a threshold)
(Event R2)
   Entering condition:
      (UE-R RSRP - Hyst > a 1^{st} threshold) and (RSRP of serving UE-R + Hyst < a 2^{nd} threshold) and optionally (RSRP of neighbour cell + Hyst < a 2^{nd} threshold)
   Leaving condition:
      (UE-R RSRP + Hyst < a 1^{st} threshold) and (RSRP of serving UE-R - Hyst > a 2^{nd} threshold) and optionally (RSRP of neighbour cell - Hyst > a 2^{nd} threshold)
(Event R3)
   Entering condition:
      ((UE-R RSRP + an offset value - Hyst) > RSRP of serving UE-R) and ((UE-R RSRP + an offset value - Hyst) > RSRP of neighbour cells)
   Leaving condition:
      ((UE-R RSRP + an offset value + Hyst) < RSRP of serving UE-R) and ((UE-R RSRP + an offset value + Hyst) < RSRP of neighbour cells)
(Event R4)
   Entering condition:
      ((RSRP of serving UE-R + an offset value + Hyst) < RSRP UE-R) and optionally (RSRP of other neighbour(s) + Hyst < threshold)
   Leaving condition:
      ((RSRP of serving UE-R + an offset value - Hyst) > RSRP UE-R) and optionally (RSRP of other neighbour(s) - Hyst > threshold)
(Event R5)
   Entering condition:
      (RSRP of serving UE-R + an offset value + Hyst) < RSRP of neighbour cells
   Leaving condition:
      (RSRP of serving UE-R + an offset value - Hyst) > RSRP of neighbour cells
(Event R6)
   Entering condition :
      (RSRP of serving UE-R + an offset value + Hyst) < threshold
   Leaving condition:
      (RSRP of serving UE-R + an offset value - Hyst) > threshold

When hysteresis is applied to the RSRP of the serving cell and also one or more neighbour cell(s) and/or UE-Relay cell (such as Events R1 and R4), the value of the hysteresis might be the same for all cells or it might be different for each cell (or group of cells).

This mechanism can also be considered for some operator to perform load balancing (i.e. to reduce usage of the base stations resources) or to re-use the same resources with a lower power of transmission via an UE Relay.

For all of the above events, the various offset and threshold values are chosen by the base station (or another network entity). The offset value is optional, i.e. it can be zero or a finite value (negative or positive). The 1^{st} threshold value might be selected to be higher than the 2^{nd} threshold value, and vice versa. However, depending on requirements, it can be beneficial to set the 1^{st} and 2^{nd} threshold values to be equal.

Generally, hysteresis can be applied such that the 'entry condition' for triggering an event requires a better value of the signal quality measure (e.g. a higher value of RSRP) than would otherwise be the case and 'leaving condition' for avoiding the repeated triggering of the event requires a lower value of the signal quality measure (e.g. a lower value of RSRP) than would otherwise be the case. This beneficially allows the system to avoid repetitive triggering of events when signal quality is fluctuating around the trigger level.

### (Operation)

Figs. 4A and 4B illustrate a first timing diagram showing a method performed by components of the communication system 1 when configuring and performing handover related measurements and reporting, according to one embodiment. In this embodiment, the generation of configuration data for configuring the events is performed by the serving relaying mobile telephone 3-3. In this example, the serving relaying mobile telephone 3-3 also takes the handover decision.

In this embodiment, the mobile telephone 3-1 measures the radio signals of the UE-R cell(s) and eNB cells as requested by its serving relaying mobile telephone 3-3. Although not shown in Figs. 4A and 4B, the mobile telephone 3-1 in this embodiment might initially have an active packet data connection (routed via its serving relaying mobile telephone 3-3) with another communication node. Therefore, the mobile telephone 3-1 is in an 'RRC Connected' mode, even if it does not transmit or receive any data.

As shown, in step s401, the base station 5 computes a list of cells of relaying mobile telephones and base stations to be measured by the mobile telephone 3-1 (e.g. list L = {eNB1, eNB2, UE3-R}). In step s403, base station 5 (using its communications control module 63 and transceiver circuit 51) generates and sends a configuration message (e.g. an RRC message such as an 'RRC Connection Reconfiguration' message) to the serving relaying mobile telephone 3-3, the configuration message including the list of relaying mobile telephones and base stations to be measured.

In step s405, serving relaying mobile telephone 3-3 recovers the information used for the mobile telephone 3-1 configuration (the information being extracted from the configuration message received from eNB in step s403), and (using its measurement configuration module 365 and UE-R cell module 367) generates configuration parameters for the mobile telephone 3-1 so that when a handover becomes necessary, a suitable handover target cell (i.e. a neighbour base station cell and/or UE-R cell with suitable signal conditions) can be selected for this mobile telephone 3. The configuration parameters include criteria which cause the mobile telephone 3-1 to send a measurement report, and also specify the details of such measurement reports (e.g. the quantities to be measured, such as either one of RSRP, RSRQ, and RSCP). The criteria might include either periodic or event-triggered criteria, or both.

In step s407, the serving relaying mobile telephone 3-3 confirms that the list reconfiguration has been successful by generating and sending an appropriate confirmation message (e.g. an 'RRC Connection Reconfiguration Complete' message) to the base station 5.

In step s409, the serving relaying mobile telephone 3-3 (using its communications control module 343 and transceiver circuit 331) generates and sends a configuration message (e.g. an 'RRC Connection Reconfiguration' message) to the mobile telephone 3-1. The serving relaying mobile telephone 3-3 includes in this message a 'MeasConfig' information element (IE), which specifies the kind of measurements and the conditions under which the measurements need to be initiated by the mobile telephone 3-1 according to the configuration parameters generated by the serving relaying mobile telephone 3-3. The 'MeasConfig' IE includes the list of base station cells and/or relaying mobile telephone cells which the mobile telephone 3-1 should take measurements for. Also, the 'MeasConfig' IE includes measurement parameters for at least one of the events (e.g. Events R0 to R6) as specified above. The mobile telephone 3-1 will use these measurement parameters to control the operation of its measurement module 45. In particular, the measurement module 45 is taking measurements on the signals from the neighbouring base stations and relaying mobile telephones in order to find a new cell to which the mobile telephone 3-1 can handover when it is experiencing a degradation in signal quality in the current cell (e.g. due to the mobile telephone 3-1 moving away from its serving relaying mobile telephone 3-3) and/or when the signals from one of the other base stations and/or relaying mobile telephones become better than a pre-set threshold (or e.g. when the signal from the serving relaying mobile telephone becomes worse than a pre-set threshold).

Therefore, in step s411, the mobile telephone 3-1 configures its measurement module 45 in accordance with the received 'MeasConfig' IE for monitoring whether or not a condition defined therein is met, and in accordance with the list of cells. Then, in step s413, the mobile telephone 3-1 confirms that the measurement reconfiguration has been successful by generating and sending a confirmation message (e.g. an 'RRC Connection Reconfiguration Complete' message) to the serving relaying mobile telephone 3-3.

In step s415, the measurement module 45 of mobile telephone 3-1 performs the configured signal measurements for the cells identified in the list included in the 'MeasConfig' IE. When the measurement module 45 of mobile telephone 3-1 determines that one of the conditions defined in the 'MeasConfig' IE has been met (i.e. one of the configured events has occurred), it informs the reporting module 47, which generates, in step s417, a report.

Next, in step s419, the mobile telephone 3-1 (using its communications control module 43 and transceiver circuit 31) generates and sends a reporting message (e.g. an 'RRC Measurement Report' message) to its serving relaying mobile telephone 3-3, and includes in this message the measurement results for the configured cells including any UE-R cells and associated information identifying the cells to which the report relates. In particular, the reporting message includes information indicative that (at least) one of the configured events (R0 to R6) has occurred.

After the serving relaying mobile telephone 3-3 has received the Measurement Report from the mobile telephone 3-1, the relaying mobile telephone 3-3 updates (if necessary) the list of cells at step s421, and subsequently at step s423 generates updated configuration parameters for the mobile telephone 3-1 based on the received reporting message. The configuration parameters can alternatively or additionally be based on the knowledge of the serving relaying mobile telephone 3-3 of the radio environment, using information received from other network nodes (e.g. eNB, Relay Node or UE-R, through SIB or dedicated signaling).

At step 425, the serving relaying mobile telephone 3-3 (using its communications control module 343 and transceiver circuit 331) generates and sends a configuration message (e.g. an 'RRC Connection Reconfiguration' message) to the mobile telephone 3-1. The serving relaying mobile telephone 3-3 includes in this message a 'MeasConfig' information element (IE), which specifies updated conditions under which the measurements need to be initiated by the mobile telephone 3-1, and an updated list of cells which the mobile telephone 3-1 should take measurements for.

In step s427, the mobile telephone 3-1 configures its measurement module 45 in accordance with the received updated 'MeasConfig' IE. Then, in step s429, the mobile telephone 3-1 confirms that the measurement reconfiguration has been successful by generating and sending a confirmation message (e.g. an 'RRC Connection Reconfiguration Complete' message) to the serving relaying mobile telephone 3-3.

In step s431, the measurement module 45 of mobile telephone 3-1 performs the configured signal measurements for the cells identified in the list included in the updated 'MeasConfig' IE. When the measurement module 45 mobile telephone 3-1 determines that one of the conditions defined in the 'MeasConfig' IE has been met (i.e. one of the configured events has occurred), it informs the reporting module 47, which generates, in step s433, a report.

Next, in step s435, the mobile telephone 3-1 (using its communications control module 43 and transceiver circuit 31) generates and sends a reporting message (e.g. an 'RRC Measurement Report' message) to the serving relaying mobile telephone 3-3, and includes in this message the measurement results for the configured cells including any UE-R cells and associated information identifying the cells to which the report relates. The reporting message includes information indicative that (at least) one of the configured events (R0 to R6) has occurred.

After the serving relaying mobile telephone 3-3 has received the Measurement Report from the mobile telephone 3-1, the relaying mobile telephone 3-3 (e.g. its handover control module 369) makes, in step s437, a handover decision for the mobile telephone 3-1 by selecting one of the cells included in the Measurement Report as the target cell to which the mobile telephone 3-1 will be handed over. In this example, the Measurement Report includes results for the cell belonging to relaying mobile telephone 3-4 ('R-Cell 4'), which the relaying mobile telephone 3-3 selects as a target cell. The serving relaying mobile telephone 3-3 takes the handover decision based on the measurement report from the mobile telephone 3-1 and, optionally, additionally based on configuration information received from the network.

In steps s439 and s441, relaying mobile telephone 3-3 instructs the mobile telephone 3-1 and relaying mobile telephone 3-4 to prepare for handover, and at step s443 handover is performed, i.e. the mobile telephone 3-1 is no longer served by relaying mobile telephone 3-3 but instead is being served by the relaying mobile telephone 3-4.

At step s445, the target relaying mobile telephone 3-4 informs the base station 5 that handover from relaying mobile telephone 3-3 is complete.

Optionally, at step s447 the base station 5 updates the list of cells of relaying mobile telephones and base stations to be measured by the mobile telephone 3-1, and generates and sends (using its communications control module 63 and transceiver circuit 51), at step s449 a configuration message (e.g. an 'RRC Connection Reconfiguration' message) to the target relaying mobile telephone 3-4, the configuration message including the list of relaying mobile telephones and base stations to be measured by mobile telephone 3-1.

In the embodiment described above with reference to Figs. 4A and 4B, the serving relaying mobile telephone 3-3 is beneficially able to generate measurement configuration parameters for measurements performed by the mobile telephones that it serves thereby providing improved system flexibility. The serving relaying mobile telephone 3-3 is also beneficially responsible for handover decisions based on measurement reports thereby providing further system flexibility and alleviating signaling overhead by avoiding additional signaling to the base station. Thus the relaying mobile telephone 3-3 is able to control the mobile telephone 3-1 without significant additional signalling to the base station 5, thereby reducing signalling overhead and allowing more reliable operation in the event of poor signal conditions between the relaying mobile telephone 3-3 and the base station 5.

Figs. 5A and 5B illustrate a first part and a second part of a second timing diagram illustrating a method performed by components of the communication system 1 when configuring and performing handover related measurements and reporting. In this example, the generation of configuration data for the events is performed by the base station 5 (or the core network), and the base station 5 (or the core network) takes the handover decision. The base station 5 communicates with the mobile telephone 3-1 through the relaying mobile telephone 3-3.

In this embodiment, the mobile telephone 3-1 measures the radio signals of the UE-R cell(s) and eNB cells as configured by the base station through the relaying mobile telephone 3-3. Although not shown in Figs. 5A and 5B, the mobile telephone 3-1 in this embodiment might initially have an active packet data connection with another communication node, such as base station 5. Therefore, the mobile telephone 3-1 is in an 'RRC Connected' mode, even if it does not transmit or receive any data.

As shown, in step s501, the base station 5 computes a list of cells of relaying mobile telephones and base stations to be measured by the mobile telephone 3-1 (e.g. list L = {eNB1, eNB2, UE3-R}). In step s503, base station 5 generates configuration parameters for the mobile telephone 3-1 so that when a handover becomes necessary, a suitable handover target cell (i.e. a neighbour base station cell and/or UE-R cell with suitable signal conditions) can be selected for this mobile telephone 3-1. The configuration parameters include criteria which cause the mobile telephone 3-1 to send a measurement report, and also specify the details of such measurement reports (e.g. the quantities to be measured, such as either one of RSRP, RSRQ, and RSCP). The criteria might include either periodic or event-triggered criteria, or both. The configuration parameters can be generated using existing information which the base station 5 holds for mobile telephone 3-1, along with information received from other network nodes.

In step s505, base station 5 (using its communications control module 63 and transceiver circuit 51) generates and sends a configuration message (e.g. an 'RRC Connection Reconfiguration' message) to the serving relaying mobile telephone 3-3. The base station 5 includes in this message a 'MeasConfig' information element (IE), which specifies the kind of measurements and the conditions under which the measurements need to be initiated by the mobile telephone 3-1, according to the configuration parameters generated by the base station 5. The 'MeasConfig' IE includes the list of base station cells and/or relaying mobile telephone cells which the mobile telephone 3-1 should take measurements for. Also, the 'MeasConfig' IE includes measurement parameters for at least one of the events (e.g. Events R0 to R6) as specified above. The mobile telephone 3-1 will use these measurement parameters to control the operation of its measurement module 45. In particular, the measurement module 45 is taking measurements on the signals from the neighbouring base stations and relaying mobile telephones in order to find a new cell to which the mobile telephone 3-1 can handover when it is experiencing a degradation in signal quality in the current cell (e.g. due to the mobile telephone 3-1 moving away from its serving relaying mobile telephone 3-3) and/or when the signals from one of the other base stations and/or relaying mobile telephones become better than a pre-set threshold (or e.g. when the signal from the serving relaying mobile telephone becomes worse than a pre-set threshold).

In step s507, the serving relaying mobile telephone 3-3 sends a configuration message (e.g, an 'RRC Connection Reconfiguration' message) to the mobile telephone 3-1 including the 'MeasConfig' information element (IE) generated by the base station 5. To facilitate this the base station 5 may include, in the configuration message sent in step s505, a UE destination address or identity specifying mobile telephone 3-1 as the destination UE, and therefore the serving relaying mobile telephone 3-3 can forward the configuration message (e.g. an 'RRC Connection Reconfiguration' message) to the mobile telephone 3-1 with minimal processing.

In step s509, the mobile telephone 3-1 configures its measurement module 45 in accordance with the received 'MeasConfig' IE for monitoring whether or not a condition defined therein is met, and in accordance with the list of cells. Then, in step s511, the mobile telephone 3-1 confirms that the measurement reconfiguration has been successful by generating and sending a configuration message (e.g. an 'RRC Connection Reconfiguration Complete' message) to the serving relaying mobile telephone 3-3. In step s513, the serving relaying mobile telephone 3-3 sends a corresponding configuration message (e.g. an 'RRC Connection Reconfiguration Complete' message) to the base station 5 specifying that the connection reconfiguration of the mobile telephone 3-1 is complete.

In step s515, the measurement module 45 of mobile telephone 3-1 performs the configured signal measurements for the cells identified in the list included in the 'MeasConfig' IE. When the measurement module 45 mobile telephone 3-1 determines that one of the conditions defined in the 'MeasConfig' IE has been met (i.e. one of the configured events has occurred), it informs the reporting module 47, which generates, in step s517, a report.

Next, in step s519, the mobile telephone 3-1 generates and sends a measurement report message (e.g. an 'RRC Measurement Report' message) to its serving relaying mobile telephone 3-3, and includes in this message the measurement results for the configured cells including any UE-R cells and associated information identifying the cells to which the report relates. In particular, the measurement report message includes information indicative that (at least) one of the configured events (R0 to R6) has occurred. In step s521, the serving relaying mobile telephone 3-3 sends a corresponding measurement report message (e.g. an 'RRC Measurement Report' message) to the base station 5 (e.g. using a reporting module).

After the base station 5 has received the Measurement Report from the serving relaying mobile telephone 3-3, the base station 5 (e.g. its handover control module 69) makes, in step s523, a handover decision for the mobile telephone 3-1 by selecting one of the cells included in the Measurement Report as the target cell to which the mobile telephone 3-1 will be handed over. In this example, the Measurement Report includes results for the cell belonging to relaying mobile telephone 3-4 ('R-Cell 4'), which the base station 5 selects as a target cell.

In steps s525 and s527, the base station 5 instructs the target relaying mobile telephone 3-4 and the serving relaying mobile telephone 3-3 respectively to prepare for handover, and at step s529 serving relaying mobile telephone 3-3 instructs the mobile telephone 3-1 to prepare for handover.

At step s531 handover is performed, i.e. the mobile telephone 3-1 is no longer served by the relaying mobile telephone 3-3 but instead is served by the relaying mobile telephone 3-4.

At step s533, the target relaying mobile telephone 3-4 informs the base station 5 that handover from relaying mobile telephone 3-3 is complete.

Furthermore, after such a handover, the list L and the configuration parameters for the mobile telephone 3-1 may be updated, according to steps s535 to s541.

After handover, the mobile telephone 3-1 generates and sends a measurement report message (e.g. an 'RRC Measurement Report' message) to relaying mobile telephone 3-4 which is now serving the mobile telephone 3-1. After the relaying mobile telephone 3-4 has received the Measurement Report from the mobile telephone 3-1, the relaying mobile telephone 3-4 updates (if necessary) the list of cells at step s539, and subsequently at step s541 generates updated configuration parameters for the mobile telephone 3-1 based on the received measurement report message. The configuration parameters can alternatively or additionally be based on the knowledge of base station 5 of the radio environment, using information received from other network nodes (e.g. eNB, Relay Node or UE-R, through SIB or dedicated signaling).

The method then proceeds to steps s543 to s561 which are equivalent to steps s505 to s521 described above, but where the relaying mobile telephone 3-4 acts as the serving cell rather than mobile telephone 3-3.

In the embodiment described with reference to Figs. 5A and 5B, the relaying mobile telephone (e.g. 3-3 or 3-4) does not take such an active part in the process of the handover decision and generation of configuration parameters. This can be advantageous because less processing is required in the relaying mobile telephone, which may have less processing resources available. Also, the base station 5 can have greater knowledge of the radio environment.

In the embodiments described with reference to Figs. 4A, 4B, 5A and 5B, at least some of the messages transmitted from/to base station 5 to the mobile telephone 3-1 are using a relaying mobile telephone may be are transparent from the point of view of the relaying mobile telephone.

Advantageously, the embodiments described with reference to Figs. 4A, 4B, 5A and 5B allow handover configuration and triggering in situations where mobile telephone cannot directly connect to base station. This could be therefore applicable in use cases or scenarios such as Public Safety, when mobile telephone will connect and communicate through a relaying mobile telephone with the network, even when it is out of coverage as no longer directly served by a network entity such as an base station or a relay node.

In summary, the methods described allow:
- a relaying mobile telephone or alternatively a base station to configure events to allow monitoring UE radio environment while UE is served by the relaying mobile telephone
- a UE to monitor relaying mobile telephone versus available base station or relaying mobile telephone (serving and neighbour) while served by relaying mobile telephone
- a UE to report at the configured timing according to criterion the configured event while served by relaying mobile telephone
- a relaying mobile telephone or alternatively a base station to use reported measurements information to initialise handover when required for a UE from relaying mobile telephone to another relaying mobile telephone or a base station or Relay Node.

### (Events R0, R1, and R3)

Fig. 6 is a flowchart illustrating a process performed by a mobile telephone 3-1 when performing cell signal measurements and reporting with respect to a cell operated by another mobile telephone configured to work as a relay. The flow chart, as a whole, shows triggering of the R1 event.

The process begins at step s600, i.e. after the mobile telephone 3-1 has received the configuration parameters from its serving relaying mobile telephone 3-3 and has set up its measurement module 45 accordingly (as specified in the received 'MeasConfig' IE provided by the serving relaying mobile telephone 3-3).

In step s602, the measurement module 45 performs the configured signal measurements, including measurement of RSRP of any UE-relay cells the mobile telephone 3-1 can detect (or has been configured to measure). When the measurement results are available, the measurement module 45 checks, in step s604, whether the measured RSRP of the UE-R cell (plus an offset value) is greater than the RSRP of the current serving UE-R. If the measurement module determines that the measured RSRP of the UE-R cell (plus an offset value) is greater than the RSRP of the current serving UE-R (outcome: 'YES'), then it proceeds to step s606. However, if the measurement module determines that the measured RSRP of the UE-R cell (plus an offset value) is not greater than the RSRP of the current serving UE-R (outcome: 'NO'), then it deems that handover is not required and therefore returns to step s600 to re-start the process when new measurements are due (as specified by the measurement configuration).

In step s606, the measurement module 45 also checks whether the measured RSRP of the UE-R cell (plus an offset value) is greater than the RSRP of the neighbour cells. If the measurement module determines that the measured RSRP of the UE-R cell (plus an offset value) is greater than the RSRP of the neighbour cells (outcome: 'YES'), then it proceeds to step s608. However, if the measurement module determines that the measured RSRP of the UE-R cell (plus an offset value) is not greater than the RSRP of the neighbour cells (outcome: 'NO'), then it deems that handover is not required and therefore returns to step s600 to re-start the process when new measurements are due.

Next, in step s608, the measurement module 45 checks whether the RSRP of the serving UE-R is below a predetermined threshold. If the measurement module determines that the RSRP of the serving UE-R is below the predetermined threshold (outcome: 'YES'), then it proceeds to step s610, in which a corresponding UE-R Event is triggered. However, if the measurement module determines that the RSRP of the serving UE-R is not below the predetermined threshold (outcome: 'NO'), then it deems that handover is not required and therefore returns to step s600 to re-start the process when new measurements are due.

If all three conditions are fulfilled, i.e. all of steps s604, s606, and s608 return a 'YES' outcome, the measurement module 45 forwards the measurement results to the reporting module 47, which will generate a corresponding event report for sending to the serving mobile telephone 3-3. After the event report has been sent to the serving mobile telephone 3-3, the mobile telephone 3-1 ends the process and awaits instructions from the mobile telephone 3-3 to handover to a selected target cell, e.g. the UE-R cell measured. In the absence of such handover instructions, the cell measurements continue according to the existing configuration and the process will restart at step s600 (or alternatively, any event report is re-transmitted to the mobile telephone 3-3 after a delay).

As shown in Fig. 6, the 'YES' outcome at each one of steps s604, s606, and s608 correspond to the UE-R specific event R1.

It will be appreciated that, whilst not shown in Fig. 6, when event R3 has been configured, if both s604 and s606 return a 'YES' outcome, the mobile telephone 3-1 triggers an R3 event (at step s610).

Similarly, whilst not shown in Fig. 6, if event R0 has been configured, in the case of a 'YES' outcome at step s604, the mobile telephone 3-1 reports the occurrence of the configured R0 event to the serving mobile telephone 3-3 (i.e. by triggering an R0 event at step s610).

It will be appreciated however, that more than one event might be configured for the mobile telephone 3-1 (e.g. all three of Events R0, R1, and R3 and/or any further events), and thus more than one UE-R trigger events might be generated and reported, depending on the outcome of the checks performed at steps s604, s606, and s608.

If more than one UE-R trigger events are detected, they might be reported to the serving base station 5 using a single measurement report or using separate measurement reports. Furthermore, UE-R events (i.e. Events R0 to R6) might be reported either together with events relating to 'normal' base station cells (i.e. Events A1 to B2) or they might be reported separately.

### (Event R2)

Fig. 7 is a flowchart illustrating another process performed by a mobile telephone 3-1 when performing cell signal measurements and reporting with respect to a cell operated by another mobile telephone configured to work as a UE relay. In particular, this example relies on comparing measured RSRP values to predetermined threshold values, by using Event R2 as an example.

The process begins at step s700, i.e. after the mobile telephone 3-1 has received the configuration parameters from its serving relaying mobile telephone 3-3 and has set up its measurement module 45 accordingly (as specified in the received 'MeasConfig' IE provided by the serving relaying mobile telephone 3-3).

In step s702, the measurement module 45 performs the configured signal measurements, including measurement of RSRP of any UE-relay cells the mobile telephone 3-1 can detect (or has been configured to measure). When the measurement results are available, the measurement module 45 checks, in step s704, whether the measured RSRP of the UE-R cell is greater than a first predetermined threshold value. If the measurement module determines that the measured RSRP of the UE-R cell is greater than the first predetermined threshold value (outcome: 'YES'), then it proceeds to step s706. However, if the measurement module determines that the measured RSRP of the UE-R cell is not greater than the first predetermined threshold value (outcome: 'NO'), then it deems that handover is not required and therefore returns to step s700 to re-start the process when new measurements are due.

In step s706, the measurement module 45 also checks whether the RSRP of the serving UE-R is smaller than a second predetermined threshold value. If the measurement module determines that the RSRP of the serving UE-R is smaller than a second predetermined threshold value (outcome: 'YES'), then it proceeds to step s710, in which a corresponding UE-R Event is triggered. However, if the measurement module determines that the RSRP of the serving UE-R is not smaller than the second predetermined threshold value (outcome: 'NO'), then it deems that handover is not required and therefore returns to step s700 to re-start the process when new measurements are due.

If both conditions are fulfilled, i.e. both steps s704 and s706 result in a 'YES' outcome, the measurement module 45 forwards the measurement results to the reporting module 47, which will generate a corresponding event report for sending to the serving relaying mobile telephone 3-3. After the event report has been sent to the serving relaying mobile telephone 3-3, the mobile telephone 3-1 ends the process and awaits instructions from the relaying mobile telephone 3-3 to handover to a selected target cell, e.g. the UE-R cell measured. In the absence of such handover instructions, the cell measurements continue according to the existing configuration and the process will restart at step s700 (or alternatively, the event report is re-transmitted to the base station after a delay).

### (Triggers for events R0, R1, and R3)

Fig. 8 is a graph illustrating the changes in signal strengths of various cells over time as measured by the mobile telephone 3-1 shown in Fig. 1. In particular, Fig. 8 illustrates the relation between handover criteria according to configured measurement events R0, R1, and R3 when the offset value is chosen to be zero.

As shown, different events cause the mobile telephone 3-1 initiating handover at different signal levels (and hence at different points in time). For example, in case of Event R0, handover might begin already when the signal level (RSRP) of the serving UE-R is still relatively high, as in this case the only condition taken into account is whether or not the RSRP of the UE-R cell is higher than the RSRP of the serving UE-R. In some situations, this might result in handing over the mobile telephone 3-1 to an UE-R cell too early, although this might be desired, for example, for load balancing reasons.

In case of Event R3, handover to an UE-R cell does not begin until the measured RSRP of the UE-R cell is higher than the respective RSRP of both the serving UE-R and any (other) neighbour cells. In this case, 'normal' base station cells might be given priority over UE-R cells unless an UE-R provides better signal conditions than other cells.

Finally, Event R1 results in handover at an even later point in time (and at a corresponding lower RSRP level of the current serving UE-R) because in this case a third condition (RSRP of serving UE-R falling below a threshold) has to be met as well. Of course, by increasing or decreasing the threshold value, the base station can fine-tune handover trigger by the mobile telephone 3-1. When configuring Event R1 with a relatively low threshold level, the serving UE-R can avoid frequent handovers for mobile telephones 3-1 within its cell whilst it may also ensure that when a handover becomes necessary, an UE-R cell can be selected if it provides better signal conditions than any other neighbour cell.

As mentioned above, hysteresis might be applied, which would effectively make the 'entering condition' for a UE-R cell harder to meet than a corresponding 'leaving condition'. Fig. 8 illustrates two of such 'entering conditions' (R0" and R3") and corresponding 'leaving conditions' (R0' and R3') wherein the 'entering condition' for a UE-R cell requires higher RSRP than the corresponding 'leaving condition'. This ensures that once a mobile telephone is handed over to an UE-R cell, it will not leave this cell until the signal quality becomes much worse than at the time of entering the cell.

### (Trigger for event R2)

Fig. 9 is a graph illustrating the changes in signal strengths of a serving cell and a UE-Relay cell over time as measured by the mobile telephone 3-1 shown in Fig. 1. In particular, Fig. 9 illustrates the handover criteria according to a configured 'entering condition' of measurement event R2. As described earlier with reference to Fig. 7, the trigger conditions for Event R2 are that i) RSRP (minus Hyst) of the UE-R cell is greater than a first threshold (which is met at point marked 'X' in Fig. 9) and ii) that RSRP (plus Hyst) of the serving UE-R falls below a second threshold (which second condition is only met at the point marked 'R2').

### (Applying hysteresis)

Fig. 10 illustrates a mechanism which takes into account different entering and leaving conditions that result from application of hysteresis. In particular, this mechanism includes checking both the entering and leaving conditions (and applying a 'time to trigger' parameter) before reporting the occurrence of an event to the serving UE-R.

Advantageously, the 'time to trigger' parameter of this alternative might be different from the time to trigger reporting of 'normal' cells. In particular, after an 'entering condition' is met for a cell (at step s904), the mobile telephone 3-1 verifies whether or not the given cell provides sufficiently stable signal conditions to qualify as a handover target cell. Therefore, when the 'entering condition' is initially met (step s904: YES), the mobile telephone 3-1 starts a timer (at steps s905) and performs further measurement(s) with respect to this cell (step s906). After this, the mobile telephone 3-1 checks (at step s908) whether or not the repeated measurements indicate that 'leaving condition' would have been met for the measured cell. If the 'leaving condition' is still not met until the expiry of the configured timer (step s909), the mobile telephone reports the cell to the network as a qualifying handover target cell. However, if the measured signal conditions deteriorate after the first measurement (step s902) but before the 'time to trigger' condition is met (step s909) such that the leaving conditions are fulfilled, the mobile telephone 3-1 does not send report to the network.

This alternative might beneficially reduce 'ping pong' type effects and signalling between the mobile telephone 3-1 and the network 1.

### (Modifications and Alternatives)

Detailed embodiments have been described above. As those skilled in the art will appreciate, a number of modifications and alternatives can be made to the above embodiments whilst still benefiting from the inventions embodied therein.

The UE Relays (mobile telephones operating as relays) described above broadcast radio information that can be measured by the mobile telephone to be handed over, for example, a reference signal (CRS / CSI-RS) or the like. Preferably, UE Relays also broadcast their own cell identifier or other information that informs the mobile telephone taking the measurements that the measured cell is operated by a relaying mobile telephone.

Regarding the timing diagram illustrated in Figs. 4A and 4B, steps s421 to s435 are optional and may not be performed by the system 1.

Furthermore, in step s405, the information may be recovered in another way, for example by processing information from the received configuration message, or alternatively (or additionally) acquiring information from an external source.

In all events R0 to R6, the "serving UE-R" can be replaced by a Primary UE-R cell or a Secondary UE-R cell in the case where carrier aggregation is applied. This applies to the following exemplary cases:
Primary cell is an eNB and Secondary cell is a UE-R, or
Primary cell is a UE-R and Secondary cell is a second UE-R, or
Primary cell is a UE-R and Secondary cell is an eNB.

In this way, the UE can communicate on carriers coming from both an eNB and a secondary or a primary UE-R, thus increasing the spectrum over which communication can occur and therefore increasing the transmitted throughput. For those skilled in art, this carrier aggregation method was introduced in 3GPP for two carriers provided by the same source eNB.

Although Figs. 2A and 2B illustrate mobile telephones 3-1 and 3-3, any of the mobile telephones 3 can have any or all of the modules illustrated in Figs. 2A and 2B, as any or all of the mobile telephones 3 can be relaying mobile telephones.

The relaying mobile telephone 3-3, when operating in accordance with the timing diagram illustrated in Figs. 5A and 5B, may not include a handover control module 369 and/or measurement configuration module 365 because in the embodiment illustrated in Figs. 5A and 5B the base station 5 (or the core network 7) controls handover and/or measurement configuration.

Figs. 4A, 4B, 5A and 5B illustrate functionality of the relaying mobile telephone and the base station. However, it will be appreciated that some of the functionality of the relaying mobile telephone (or the base station) may be provided in isolation in either the relaying mobile telephone or the base station.

In the above embodiments, Events R0 to R6 are described as requiring measurements of the RSRP of the UE-R cell, the serving UE-R cell, and the neighbour cell. However, it will be appreciated that measurements of RSRQ or RSCP or measurement of multiple quantities are also possible. This would beneficially allow configuring inter-RAT measurements (i.e. Events B1/B2) in case the UE-R Cell uses other Radio Access Technology (RAT) than the serving base station. In some cases, RSRP might be measured for some cells, whilst RSRQ and/or RSCP might be measured for other cells.

In the above embodiments, Events R0 to R6 are described to take into account various offset and/or threshold values. An offset value might be defined as any of the values 'Ofn', 'Ocn', 'Ofp', 'Ocp', and 'Off' specified in 3GPP TS 36.331. It will be appreciated however, that various combinations and alternatives are possible, such as, for example:
- an offset value might be a suitable combination of any of 'Ofn', 'Ocn', 'Ofp', 'Ocp', and 'Off' (and/or any other offset values);
- different events might have different specified (single or combined) offset values.

For example, in case of using an offset value, the offset value might be applicable to all conditions or only to some of the conditions. Moreover, hysteresis might also be applied to all conditions or only to some of the conditions. In some cases, different hysteresis values might be used for specifying an 'entering condition' and a corresponding 'leaving condition'. In all examples, thresholds values might be the same for the serving cell and neighbour cell(s). However, it is also possible to configure different thresholds for the serving and the neighbour cell(s).

A 'handover timer' parameter might be configured to define the maximum time that may elapse between taking the measurements and initiating a handover (to a UE-R cell). Beneficially, such 'handover timer' might take into account the different requirements for UE-R cell based mobility than normal (i.e. eNB/RN based) mobility.

Moreover, any of Events R0 to R6 might be specified such that an entering or leaving condition needs to be met for a minimum duration of time (or for a minimum number of consecutive measurements) before they get reported to the serving base station. This will beneficially ensure that handover will not be triggered immediately upon detecting an increase or decrease in signal quality within a measured UE-R cell but only when the changed signal conditions still meet the trigger condition after the minimum amount of time has passed or after the minimum number (e.g. more than one) of measurements have been made on those signals. This way frequent handovers (e.g. due to fluctuations in the quality of signals transmitted by the measured UE Relay) can be avoided.

It will also be appreciated that either one of the hysteresis, offset, time to trigger values might be a positive or a negative value, or zero. Further, the comparison (e.g. at steps s608, s704, and s706) can be defined as "less (or equal) than a threshold" or "higher (or equal) than a threshold".

The serving UE-R might configure the same offset and/or time to trigger values for all mobile telephones within its cell(s) or might configure a different offset and/or time to trigger value for each mobile telephone (or group of mobile telephones).

It will also be appreciated that distinct triggers can be defined for an "entering" condition (i.e. handover to an UE-R cell) and a "leaving" condition (i.e. handover from an UE-R cell). However, it is also possible to define the same triggers for both the "entering" condition and the "leaving" condition for an UE-R cell or use only one of them.

Some possible events are described above, which take into account signal conditions in an UE Relay cell. However, it will be appreciated that the configured events might take into account signal conditions in more than one UE Relay cell.

For example, in any of the above defined events, an additional condition relating to other UE-Relays might be included. This might be beneficial in cases when the network needs to compare the RSRP of a candidate UE-Relay with that of other candidate UE-Relays. For example, using the example of Event R0, the entering condition might be defined as follows: ((UE-R RSRP + an offset value - Hyst) > RSRP of serving UE-R) and (UE-R RSRP + an offset value - Hyst) > RSRP of other UE-R(s))). A corresponding leaving condition might be defined as: ((UE-R RSRP + an offset value + Hyst) < RSRP of serving UE-R) and (UE-R RSRP + an offset value + Hyst) < RSRP of other UE-R(s)).

Alternatively, any of the above described events might be configured using "RSRP of other UE-Relay(s)" instead of "RSRP of neighbour cell(s)". In this case, the mobile telephone will be beneficially able to compare the signal conditions offered by its candidate UE-Relay with other candidate UE-Relays. For example, based on Event R1, an entering condition might be defined as: (((UE-R RSRP + an offset value - Hyst) > RSRP of serving UE-R) and ((UE-R RSRP + an offset value - Hyst) > RSRP of other UE-R(s)) and (RSRP serving UE-R + Hyst < a threshold)). A corresponding leaving condition might be defined as: (((UE-R RSRP + an offset value + Hyst) < RSRP of serving UE-R) and ((UE-R RSRP + an offset value + Hyst) < RSRP of other UE-R(s)) and (RSRP serving UE-R - Hyst > a threshold)).

In the above embodiments, communications protocols and interfaces conforming to the 3GPP LTE standards are described, thus a 'UER-Uu' interface (which might be similar to an 'RN-Uu' interface) is provided between the UE Relay and the mobile telephone to be relayed. However, it will be appreciated that the use of other communication standards is also possible.

For example, the link provided between the UE Relay and the mobile telephone to be relayed might use any 3GPP technologies, such as GSM, UMTS, LTE, and the like. Alternatively, a different (e.g. non-3GPP) communication technology might be used, such as Wi-Fi, CDMA, WiMAX, and the like. If the mobile telephone also supports other technologies than LTE (e.g. 3GPP technologies such as UMTS & HSPA or non-3GPP technologies such as WiFi, WiMAX, CDMA) its transceiver circuit and communications control module might be implemented differently than described above.

When measuring LTE cells, the mobile telephone might measure the value of, for example, RSRP and/or RSSI and/or RSRQ. In case of cells implementing a different wireless standard (e.g. CDMA), other parameters might be measured, such as RSCP.

In the above embodiments, the configuration data comprises trigger events specific for UE Relays (which are mobile telephones operating in a relaying mode). However, it will be appreciated that such trigger events are also applicable to other types of relaying devices, e.g. conventional relay nodes and the like.

When the configuration generated by the base station (at step s503) is of a periodic type and when configuration parameters are different from the previous configuration sent to the UE, the configuration data is re-sent (i.e. step s505).

The configuration data may define the required periodicity of the measurements to be performed by the mobile telephone (i.e. step s515 is repeated at predefined intervals).

The configuration data may also define the required periodicity of the measurement reports to be sent from the mobile telephone to the UE-R (i.e. step s519 is repeated at predefined intervals).

Some events might be particularly beneficial in situations when handover to base station cells is to be avoided (for example, for load balancing reasons). In case of configuring Event R4 for a particular mobile telephone without configuring measurements for neighbour base station cells, only the serving cell and a candidate UE-Relay cell is measured. This may result in a faster reporting and handover procedure.

Event R5 might also be particularly beneficial for load balancing (i.e. when a base station or UE-R is seeking to reduce usage of certain frequency(-ies) or to re-use a certain frequency as a lower power UE-R cell). It can also be used for spectrum aggregation from a UE-R cell and from the serving eNB cell.

It will be appreciated that the base station or UE-R will be able to determine which mobile telephones support relaying functionality, e.g. by receiving information regarding the mobile telephones' capabilities either from the HSS, the MME, or the mobile telephones themselves. This information can be used to compute the list for configuring measurements of neighbour UE-R.

Similarly, the base station or UE-R will also be able to determine which mobile telephones are capable of receiving relayed data via an UE Relay. This capability might also be determined based on information received from the HSS, the MME, or the mobile telephones themselves. Beneficially, the base station will only configure Events R0 to R6 for a particular mobile telephone after it has verified that this mobile telephone is capable of receiving relayed data. For mobile telephones not capable of receiving relayed data (via UE Relays) the base station or UE-R will not configure Events R0 to R6 - although it might still configure Events A1 to B2 with respect to UE Relay cells but it will not initiate handover to such cells for mobile telephones not capable of receiving relayed data (via UE Relays). For these mobile telephones, the base station or UE-R will select a handover cell that is operated by a base station or a conventional relay node even if the received measurement report indicates that UE-R cells provide better signal conditions.

In the above embodiments, the base station or UE-R configures measurement data and receives the results of any measurement using RRC signalling. However, it will be appreciated that other type of signalling might be used, either additionally or alternatively. For example, measurement configuration (including Events R0 to R6) may be sent via dedicated RRC signalling or non-dedicated RRC signalling such as system broadcast and the like. Furthermore, any type of signalling may be used at the interface between the base station and UE-R, and any type of signalling may be used at the interface between the UE-R and UE. In particular, the interface between the UE-R and the UE may use a non-RRC protocol, possibly a protocol which allows RRC messages to be encapsulated (e.g. transparently) within non-RRC messages.

The configuration data might be specific for each mobile telephone (or groups of mobile telephones) or might be common for all mobile telephones within the cell(s) of the base station or within the whole communication network.

In the above embodiments, a mobile telephone based telecommunication system was described. As those skilled in the art will appreciate, the signalling techniques described in the present application can be employed in other communication systems. Although the above embodiments described mobile telephones as examples of user equipment, other communication nodes or mobile communication devices may also be used for example, personal digital assistants, laptop computers, web browsers, e-book readers, personal computers implementing 3GPP technology, machine type communication (MTC) devices, modem devices included in routers (e.g. a MIFI - LTE WIFI router), etc. may be used without departing from the scope of the invention.

In the embodiments described above, the mobile telephones and the base stations will each include transceiver circuitry. Typically this circuitry will be formed by dedicated hardware circuits. However, in some embodiments, part of the transceiver circuitry may be implemented as software run by the corresponding controller.

In the above embodiments, a number of software modules were described. As those skilled in the art will appreciate, the software modules may be provided in compiled or un-compiled form and may be supplied to the base station or the relay station as a signal over a computer network, or on a recording medium. Further, the functionality performed by part or all of this software may be performed using one or more dedicated hardware circuits.

Various other modifications will be apparent to those skilled in the art and will not be described in further detail here.

For example, the present invention can be materialized by a program for causing a computer such as a CPU (Central Processing Unit) to execute the processes shown in Figs. 4A to 7 and 9.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM, CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

### (Summary of measurement events defined in 3GPP TS 36.331)

### 5.5.4.2 Event A1 (Serving becomes better than threshold):

Inequality A1-1 (Entering condition)
   *Ms* - *Hys* > *Thresh*
Inequality A1-2 (Leaving condition)
   *Ms + Hys* < *Thresh*

### 5.5.4.3 Event A2 (Serving becomes worse than threshold):

Inequality A2-1 (Entering condition)
   *Ms*+*Hys*<*Thresh*
Inequality A2-2 (Leaving condition)
   *Ms*-*Hys*>*Thresh*

### 5.5.4.4 Event A3 (Neighbour becomes offset better than PCell):

Inequality A3-1 (Entering condition)
   *Mn*+*Ofn*+*Ocn*-*Hys*>*Mp*+*Ofp*+*Ocp*+*Off*
Inequality A3-2 (Leaving condition)
   *Mn*+*Ofn*+*Ocn*+*Hys*<*Mp*+*Ofp*+*Ocp*+*Off*

### 5.5.4.5 Event A4 (Neighbour becomes better than threshold):

Inequality A4-1 (Entering condition)
   *Mn*+*Ofn*+*Ocn-Hys*>*Thresh*
Inequality A4-2 (Leaving condition)
   *Mn*+*Ofn*+*Ocn*+*Hys*<*Thresh*

### 5.5.4.6 Event A5 (PCell becomes worse than threshold1 and neighbour becomes better than threshold2):

Inequality A5-1 (Entering condition 1)
   *Mp*+*Hys*<*Thresh*1
Inequality A5-2 (Entering condition 2)
   *Mn*+*Ofn*+*Ocn*-*Hys*>*Thresh*2
Inequality A5-3 (Leaving condition 1)
   *Mp*-*Hys*>*Thresh*1
Inequality A5-4 (Leaving condition 2)
   *Mn*+*Ofn*+*Ocn*+*Hys*<*Thresh*2

### 5.5.4.6a Event A6 (Neighbour becomes offset better than SCell):

Inequality A6-1 (Entering condition)
   *Mn*+*Ocn*-*Hys*>*Ms*+*Ocs*+*Off*
Inequality A6-2 (Leaving condition)
   *Mn*+*Ocn*+*Hys*<*Ms*+*Ocs*+*Off*

### 5.5.4.7 Event B1 (Inter RAT neighbour becomes better than threshold):

Inequality B1-1 (Entering condition)
   *Mn*+*Ofn*-*Hys*>*Thresh*
Inequality B1-2 (Leaving condition)
   *Mn*+*Ofn*+*Hys*<*Thresh*

### 5.5.4.8 Event B2 (PCell becomes worse than threshold1 and inter RAT neighbour becomes better than threshold2):

Inequality B2-1 (Entering condition 1)
   *Mp*+*Hys*<*Thresh*1
Inequality B2-2 (Entering condition 2)
   *Mn*+*Ofn*-*Hys*>*Thresh*2
Inequality B2-3 (Leaving condition 1)
   *Mp*-*Hys*>*Thresh*1
Inequality B2-4 (Leaving condition 2)
   *Mn*+*Ofn*+*Hys*<*Thresh*2

Wherein:
***Ms*** is the measurement result of the serving cell, not taking into account any cell individual offset
***Mn*** is the measurement result of the neighbouring cell, not taking into account any offsets.
***Ofn*** is the frequency specific offset of the frequency of the neighbour cell (i.e. *offsetFreq* as defined within *measObjectEUTRA* corresponding to the frequency of the neighbour cell).
***Ocn*** is the cell specific offset of the neighbour cell (i.e. *cellIndividualOffset* as defined within *measObjectEUTRA* corresponding to the frequency of the neighbour cell), and set to zero if not configured for the neighbour cell.
***Mp*** is the measurement result of the PCell, not taking into account any offsets.
***Ofp*** is the frequency specific offset of the primary frequency (i.e. *offsetFreq* as defined within *measObjectEUTRA* corresponding to the primary frequency).
***Ocp*** is the cell specific offset of the PCell (i.e. *cellIndividualOffset* as defined within *measObjectEUTRA* corresponding to the primary frequency), and is set to zero if not configured for the PCell.
***Hys*** is the hysteresis parameter for this event (i.e. *hysteresis* as defined within *reportConfigEUTRA* for this event).
***Off*** is the offset parameter for this event (i.e. *a3-Offset* as defined within *reportConfigEUTRA* for this event).
***Mn, Mp*** are expressed in dBm in case of RSRP, or in dB in case of RSRQ.
***Ofn, Ocn, Ofp, Ocp, Hys, Off*** are expressed in dB.

This application is based upon and claims the benefit of priority from United Kingdom Patent Application No. 1300534.3, filed on January 11, 2013.

### [Supplementary notes]

[Supplementary note 1]
   A mobile communication device for providing measurement reports to a communication network comprising a plurality of cells, the communication device comprising:
   means for connecting, within a relay cell of said plurality of cells, to a relay mobile communication device, wherein said relay cell is operated by a relay mobile communication device;
   means for receiving configuration data from said relay mobile communication device, said configuration data for configuring measurements in at least one of said plurality of cells wherein said configuration data defines at least one trigger event for triggering measurement reporting for at least one cell of said plurality of cells;
   means for performing measurements, based on said received configuration data, in said at least one cell;
   means for determining whether or not said trigger event has occurred based on results of said measurements; and
   means for sending a measurement report to said relay mobile communication device, when said trigger event has been determined to have occurred.
[Supplementary note 2]
   A relay mobile communication device for operating a relay cell in a communication network comprising a plurality of cells and for obtaining measurement reports from a further mobile communication device; said relay mobile communication device comprising:
   - 369: HANDOVER CONTROL MODULE
   - 51: TRANSCEIVER CIRCUIT
   - 53: ANTENNA
   - 55: NETWORK INTERFACE
   - 57: CONTROLLER
   - 59: MEMORY
   - 61: OPERATING SYSTEM
   - 63: COMMUNICATIONS CONTROL MODULE
   - 65: MEASUREMENT CONFIGURATION MODULE
   - 67: UE-R CELL MODULE
   - 69: HANDOVER CONTROL MODULE

## Claims

1. A mobile user equipment, 'UE', relay (3-3) for operating a relay cell in a communication network (1) comprising a plurality of cells and for obtaining measurement reports from a further mobile UE (3), said relay UE comprising:
means for operating (331) the relay cell;
means for establishing (343) a connection with a base station via a base station to UE 3GPP interface and a connection with the further mobile UE within said relay cell via a dedicated UE relay to UE 3GPP interface;
means for transmitting (365) configuration data to the further mobile UE via the dedicated UE relay to UE 3GPP interface, wherein said configuration data defines at least one trigger event for triggering measurement reporting for at least one cell of said plurality of cells;
means for receiving (331) a measurement report, from the further mobile UE via the dedicated UE relay to UE 3GPP interface, responsive to said trigger event occurring.

2. The mobile user equipment relay (3-3) according to claim 1, further comprising means for initiating handover (369) of the further mobile UE (3), based on the received measurement report.

3. The mobile user equipment relay (3-3) according to claim 1, further comprising means for transmitting (331) said measurement report to a base station (5) to which the mobile user equipment relay is connected.

4. The mobile user equipment relay (3-3) according to claim 3, further comprising means for receiving (331), responsive to the measurement report, a message from the base station (5) for initiating handover of the further mobile UE (3), and means for transmitting (331), to the further mobile UE, a message for initiating said handover of the further mobile UE.

5. The mobile user equipment relay (3-3) according to any of claims 1 to 4 wherein said at least one cell comprises a candidate cell for potential handover to said cell.

6. The mobile user equipment relay (3-3) according to any of claims 1 to 5 wherein said configuration data defines a condition for a trigger event which occurs when a result of said measurements meets or exceeds a threshold value.

7. The mobile user equipment relay (3-3) according to any of claims 1 to 6 wherein said configuration data defines a condition for a trigger event which occurs when a result of said measurements meets or falls below a, or a further, threshold value.

8. The mobile user equipment relay (3-3) according to claim 6 or 7 wherein the, or each, threshold comprises a value provided in said configuration data.

9. The mobile user equipment relay (3-3) according to any of claims 1 to 8 wherein said configuration data defines a condition for a trigger event which occurs when a result of said measurements meets or exceeds a result of a corresponding measurement for a further of said plurality of cells.

10. The mobile user equipment relay (3-3) according to any of claims 1 to 9 wherein said configuration data defines a condition for a trigger event which occurs when a result of said measurements meets or falls below a result of a corresponding measurement for a further, or yet further, of said plurality of cells.

11. The mobile user equipment relay (3-3) according to any of claims 7 to 10 wherein said configuration data defines at least one hysteresis, and/or offset, value defining an extent to which a result of said measurement should exceed or fall below a threshold or corresponding measurement for a further of said plurality of cells for an event to be triggered.

12. The mobile user equipment relay (3-3) according to any of claims 1 to 11 wherein said results of said measurements comprise a measure of signal conditions of said at least one cell of said plurality of cells.

13. A method, performed by a mobile user equipment, 'UE', relay (3-3), of operating a relay cell in a communication network (1) comprising a plurality of cells and for obtaining measurement reports from a further mobile UE (3), said method comprising:
establishing a connection with a base station via a base station to UE 3GPP interface and a connection with the further mobile UE within said relay cell via a dedicated UE relay to UE 3GPP interface;
transmitting configuration data to the further mobile UE via the dedicated UE relay to UE 3GPP interface, wherein said configuration data defines at least one trigger event for triggering measurement reporting for at least one cell of said plurality of cells;
receiving a measurement report, from the further mobile UE via the dedicated UE relay to UE 3GPP interface, responsive to said trigger event occurring.

## Patentansprüche

1. Mobiles Benutzergerät, UE, Relais (3-3) zum Betreiben einer Relaiszelle in einem Kommunikationsnetz (1), das mehrere Zellen aufweist, und zum Erlangen von Messungsberichten aus einem weiteren mobilen UE (3), wobei das Relais-UE aufweist:
eine Einrichtung zum Betreiben (331) der Relaiszelle;
eine Einrichtung zum Herstellen (343) einer Verbindung mit einer Basisstation über eine Basisstation zu UE 3GPP Schnittstelle und einer Verbindung mit dem weiteren mobilen UE innerhalb der Relaiszelle über eine dedizierte UE-Relais zu UE 3GPP Schnittstelle;
eine Einrichtung zum Senden (365) von Konfigurationsdaten zu dem weiteren mobilen UE über die dedizierte UE-Relais zu UE 3GPP Schnittstelle, wobei die Konfigurationsdaten mindestens ein Triggerereignis zum Triggern einer Messungsberichtbereitstellung für mindestens eine Zelle der mehreren Zellen definieren;
eine Einrichtung zum Empfangen (331) eines Messungsberichts aus dem weiteren UE über die dedizierte UE-Relais zu UE 3GPP Schnittstelle als Antwort auf ein Stattfinden des Triggerereignisses.

2. Mobiles Benutzergerät-Relais (3-3) nach Anspruch 1, ferner aufweisend eine Einrichtung zum Initiieren eines Handover (369) des weiteren mobilen UE (3) auf Basis des empfangenen Messungsberichts.

3. Mobiles Benutzergerät-Relais (3-3) nach Anspruch 1, ferner aufweisend eine Einrichtung zum Senden (331) des Messungsberichts zu einer Basisstation (5), mit der das mobile Benutzergerät-Relais verbunden ist.

4. Mobiles Benutzergerät-Relais (3-3) nach Anspruch 3, ferner aufweisend eine Einrichtung zum Empfangen (331), als Antwort auf den Messungsbericht, einer Nachricht zum Initiieren des Handover des weiteren mobilen UE (3) aus der Basisstation (5), und eine Einrichtung zum Senden (331), zu dem weiteren mobilen UE, einer Nachricht zum Initiieren des Handover des weiteren mobilen UE.

5. Mobiles Benutzergerät-Relais (3-3) nach einem der Ansprüche 1 bis 4, wobei die mindestens eine Zelle eine Kandidatenzelle für ein mögliches Handover zu der Zelle aufweist.

6. Mobiles Benutzergerät-Relais (3-3) nach einem der Ansprüche 1 bis 5, wobei die Konfigurationsdaten eine Bedingung für ein Triggerereignis definieren, das stattfindet, wenn ein Ergebnis der Messungen einen Schwellenwert erfüllt oder überschreitet.

7. Mobiles Benutzergerät-Relais (3-3) nach einem der Ansprüche 1 bis 6, wobei die Konfigurationsdaten eine Bedingung für ein Triggerereignis definieren, das stattfindet, wenn ein Ergebnis der Messungen einen oder einen weiteren Schwellenwert erfüllt oder unterschreitet.

8. Mobiles Benutzergerät-Relais (3-3) nach Anspruch 6 oder 7, wobei der oder jeder Schwellenwert einen Wert aufweist, der in den Konfigurationsdaten bereitgestellt ist.

9. Mobiles Benutzergerät-Relais (3-3) nach einem der Ansprüche 1 bis 8, wobei die Konfigurationsdaten eine Bedingung für ein Triggerereignis definieren, das stattfindet, wenn ein Ergebnis der Messungen ein Ergebnis einer entsprechenden Messung für eine weitere der mehreren Zellen erfüllt oder überschreitet.

10. Mobiles Benutzergerät-Relais (3-3) nach einem der Ansprüche 1 bis 9, wobei die Konfigurationsdaten eine Bedingung für ein Triggerereignis definieren, das stattfindet, wenn ein Ergebnis der Messungen ein Ergebnis einer entsprechenden Messung für eine weitere oder noch weitere der mehreren Zellen erfüllt oder unterschreitet.

11. Mobiles Benutzergerät-Relais (3-3) nach einem der Ansprüche 7 bis 10, wobei die Konfigurationsdaten mindestens einen Hysterese- und/oder Offset-Wert definieren, der ein Ausmaß definiert, in welchem ein Ergebnis der Messung einen Schwellenwert oder eine entsprechende Messung für eine weitere der mehreren Zellen überschreiten oder unterschreiten sollte, um ein Ereignis zu triggern.

12. Mobiles Benutzergerät-Relais (3-3) nach einem der Ansprüche 1 bis 11, wobei die Ergebnisse der Messungen ein Maß von Signalbedingungen der mindestens einen Zelle der mehreren Zellen aufweisen.

13. Von einem mobilen Benutzergerät, UE, Relais (3-3) durchgeführtes Verfahren zum Betreiben einer Relaiszelle in einem Kommunikationsnetz (1), das mehrere Zellen aufweist, und zum Erlangen von Messungsberichten aus einem weiteren mobilen UE (3), wobei das Verfahren aufweist:
Herstellen einer Verbindung mit einer Basisstation über eine Basisstation zu UE 3GPP Schnittstelle und einer Verbindung mit dem weiteren mobilen UE innerhalb der Relaiszelle über eine dedizierte UE-Relais zu UE 3GPP Schnittstelle;
Senden von Konfigurationsdaten zu dem weiteren mobilen UE über die dedizierte UE-Relais zu UE 3GPP Schnittstelle, wobei die Konfigurationsdaten mindestens ein Triggerereignis zum Triggern einer Messungsberichtbereitstellung für mindestens eine Zelle der mehreren Zellen definieren;
Empfangen eines Messungsberichts aus dem weiteren UE über die dedizierte UE-Relais zu UE 3GPP Schnittstelle als Antwort auf ein Stattfinden des Triggerereignisses.

## Revendications

1. Relais d'équipement utilisateur, 'UE', mobile (3-3) pour exploiter une cellule de relais dans un réseau de communication (1) comprenant une pluralité de cellules et pour obtenir des rapports de mesure à partir d'un autre UE mobile (3), ledit UE relais comprenant :
des moyens pour exploiter (331) la cellule de relais ;
des moyens pour établir (343) une connexion avec une station de base via une interface 3GPP station de base-UE et une connexion avec l'autre UE mobile à l'intérieur de ladite cellule de relais via une interface 3GPP relais d'UE-UE dédiée ;
des moyens pour transmettre (365) des données de configuration à l'autre UE mobile via l'interface 3GPP relais d'UE-UE dédiée, dans lequel lesdites données de configuration définissent au moins un événement déclencheur pour déclencher un rapport de mesure pour au moins une cellule de ladite pluralité de cellules ;
des moyens pour recevoir (331) un rapport de mesure, en provenance de l'autre UE mobile via l'interface 3GPP relais d'UE-UE dédiée, en réponse audit événement déclencheur se produisant.

2. Relais d'équipement utilisateur mobile (3-3) selon la revendication 1, comprenant en outre des moyens pour lancer un transfert (369) de l'autre UE mobile (3), sur la base du rapport de mesure reçu.

3. Relais d'équipement utilisateur mobile (3-3) selon la revendication 1, comprenant en outre des moyens pour transmettre (331) ledit rapport de mesure à une station de base (5) à laquelle le relais d'équipement utilisateur mobile est connecté.

4. Relais d'équipement utilisateur mobile (3-3) selon la revendication 3, comprenant en outre des moyens pour recevoir (331), en réponse au rapport de mesure, un message en provenance de la station de base (5) pour lancer un transfert de l'autre UE mobile (3), et des moyens pour transmettre (331), à l'autre UE mobile, un message pour lancer ledit transfert de l'autre UE mobile.

5. Relais d'équipement utilisateur mobile (3-3) selon l'une quelconque des revendications 1 à 4, dans lequel ladite au moins une cellule comprend une cellule candidate pour un transfert potentiel vers ladite cellule.

6. Relais d'équipement utilisateur mobile (3-3) selon l'une quelconque des revendications 1 à 5, dans lequel lesdites données de configuration définissent une condition pour un événement déclencheur qui se produit lorsqu'un résultat desdites mesures atteint ou dépasse une valeur de seuil.

7. Relais d'équipement utilisateur mobile (3-3) selon l'une quelconque des revendications 1 à 6, dans lequel lesdites données de configuration définissent une condition pour un événement déclencheur qui se produit lorsqu'un résultat desdites mesures atteint ou tombe en dessous d'une, ou d'une autre, valeur de seuil.

8. Relais d'équipement utilisateur mobile (3-3) selon la revendication 6 ou 7, dans lequel le, ou chaque, seuil comprend une valeur fournie dans lesdites données de configuration.

9. Relais d'équipement utilisateur mobile (3-3) selon l'une quelconque des revendications 1 à 8, dans lequel lesdites données de configuration définissent une condition pour un événement déclencheur qui se produit lorsqu'un résultat desdites mesures atteint ou dépasse un résultat d'une mesure correspondante pour une autre de ladite pluralité de cellules.

10. Relais d'équipement utilisateur mobile (3-3) selon l'une quelconque des revendications 1 à 9, dans lequel lesdites données de configuration définissent une condition pour un événement déclencheur qui se produit lorsqu'un résultat desdites mesures atteint ou tombe en dessous d'un résultat d'une mesure correspondante pour une autre, ou encore une autre, de ladite pluralité de cellules.

11. Relais d'équipement utilisateur mobile (3-3) selon l'une quelconque des revendications 7 à 10, dans lequel lesdites données de configuration définissent au moins une valeur d'hystérésis, et/ou de décalage, définissant une étendue jusqu'à laquelle un résultat de ladite mesure doit dépasser ou tomber en dessous d'un seuil ou d'une mesure correspondante pour une autre de ladite pluralité de cellules pour qu'un événement soit déclenché.

12. Relais d'équipement utilisateur mobile (3-3) selon l'une quelconque des revendications 1 à 11, dans lequel lesdits résultats desdites mesures comprennent une mesure de conditions de signal de ladite au moins une cellule de ladite pluralité de cellules.

13. Procédé, effectué par un relais d'équipement utilisateur, 'UE', mobile (3-3), d'exploitation d'une cellule de relais dans un réseau de communication (1) comprenant une pluralité de cellules et pour obtenir des rapports de mesure à partir d'un autre UE mobile (3), ledit procédé comprenant :
l'établissement d'une connexion avec une station de base via une interface 3GPP station de base-UE et une connexion avec l'autre UE mobile à l'intérieur de ladite cellule de relais via une interface 3GPP relais d'UE-UE dédiée ;
la transmission de données de configuration à l'autre UE mobile via l'interface 3GPP relais d'UE-UE dédiée, dans lequel lesdites données de configuration définissent au moins un événement déclencheur pour déclencher un rapport de mesure pour au moins une cellule de ladite pluralité de cellules ;
la réception d'un rapport de mesure, en provenance de l'autre UE mobile via l'interface 3GPP relais d'UE-UE dédiée, en réponse audit événement déclencheur se produisant.
